# EUROPÄISCHE PATENTANMELDUNG

(11) **EP 3 831 490 A1**
(43) Veröffentlichungstag der Anmeldung: **09.06.2021**
(21) Anmeldenummer: 19213186.0
(22) Anmeldetag: 03.12.2019
(51) Int. Cl.: B01L 7/00, B01L 9/06, B33Y 10/00, B29C 64/00, B01L 9/00

(54) **THERMOBLOCK ZUR AUFNAHME UND TEMPERIERUNG MINDESTENS EINES LABORPROBENGEFÄSSES, HERSTELLUNGSVERFAHREN UND SIMULATIONSVERFAHREN**

(71) Anmelder: Eppendorf AG, 22339 Hamburg (DE)
(72) Erfinder: Kirsch-Rösner, Malte, 22147 Hamburg (DE); Dürr, Florian, 22607 Hamburg (DE); Tasch, Henner, 22397 Hamburg (DE); Höper, Thore, 22089 Hamburg (DE); Petzold, Manuel, 22844 Norderstedt (DE)
(74) Vertreter: Ricker, Mathias

(57) **Zusammenfassung**

Die Erfindung bezieht sich auf einen Thermoblock zur Aufnahme und Temperierung mindestens eines Laborprobengefäßes in einem Labortemperiergerät, insbesondere in einem PCR-Thermocycler, wobei der Thermoblock mittels eines additiven Fertigungsverfahrens unter Verwendung eines metallhaltigen Werkstoffs hergestellt wurde. Die Erfindung betrifft zudem ein Verfahren zur Herstellung des Thermoblocks und ein computerimplementiertes Verfahren zur Simulation physikalischer Eigenschaften des erfindungsgemäß herzustellenden Thermoblocks.

## Beschreibung

Die vorliegende Erfindung betrifft einen Thermoblock zur Aufnahme und Temperierung mindestens eines Laborprobengefäßes, insbesondere einer Vielzahl von Laborprobengefäßen, in einem Labortemperiergerät, insbesondere in einem PCR-Thermocycler. Die Erfindung betrifft zudem ein Verfahren zur Herstellung eines Thermoblocks und ein computerimplementiertes Verfahren zur Simulation physikalischer Eigenschaften des erfindungsgemäß herzustellenden Thermoblocks.

Solche Thermoblöcke werden insbesondere in für die PCR (polymerase chain reaction, Polymerasekettenreaktion) bestimmten Thermocyclern eingesetzt. Thermocycler sind Labortemperiergeräte, bei denen flüssige Proben in Temperaturzyklen auf bestimmte Temperaturlevel aufgeheizt bzw. gekühlt werden. Zur Temperaturregelung (Temperierung) werden in der Regel Peltierelemente verwendet, die mit der Blockunterseite thermisch gekoppelt sind. Ein Temperaturzyklus besteht dabei aus mindestens zwei, im Falle der PCR oftmals zwei oder drei Temperaturstufen, die gemäß einem vorbestimmten Protokoll eingestellt und für die gewünschte Dauer eingehalten werden. Die Temperaturzyklen werden vielfach hintereinander wiederholt, um das gewünschte Ergebnis zu erhalten, insbesondere die Vervielfachung einer DNA oder DNA-Sequenz. Im Falle der PCR liegen typische Temperaturlevel eines Temperaturzyklus bei 55 °C, 70 °C, und 95 °C. Die für eine spezifische Vervielfältigungsreaktion optimalen Temperaturlevel können von den genannten drei Temperaturwerten abweichen. Die optimalen Temperaturlevel lassen sich ermitteln, indem in einem Thermoblock ein Temperaturgradient angelegt wird, so dass sich gleichzeitig eine Variation von Temperaturleveln im Thermoblock erzeugen lässt. Die optimale Temperatur eines Temperaturlevels ist beispielsweise im Falle einer PCR jene Temperatur, die -in Kombination mit den anderen benötigten optimalen Temperaturleveln- zur maximalen Ausbeute des vervielfältigten Produkts führt.

Die Effizienz eines Thermocyclers bzw. eines Thermoblocks bemisst sich unter anderem an der Präzision, mit der Temperaturlevel eingehalten werden. Werden beispielsweise in einem Thermoblock eine Vielzahl von identischen Proben jeweils in einem Laborprobengefäß gleichzeitig temperiert, ist in den meisten Fällen gewünscht, dass in jedem Laborprobengefäß, z.B. dem entsprechenden Probennapf einer PCR-Platte, die gleiche Temperatur präzise eingestellt wird, insbesondere auch für die gleiche Dauer. Es ist bei dieser Zielsetzung erforderlich, dass bei einer gegebenen Wärme- bzw. Kühlleistung der am Thermoblock wirkenden Temperiereinrichtungen eine möglichst homogene Temperaturverteilung im Thermoblock gleichzeitig erzielt wird. Eine bekannte Quelle für Temperaturinhomogenität im Thermoblock sind die seitlichen Randbereiche des Thermoblocks, die stärker als das Blockzentrum aus seitlicher Richtung der Umgebungstemperatur ausgesetzt sind. Wird ein Thermoblock von unten flächig von Peltierelementen temperiert, so weichen die in den Probengefäßaufnahmen des Randbereichs gemessenen Temperaturen von den in den Probengefäßaufnahmen des Blockzentrums gemessenen Temperaturen ab. Einige Thermocyclerhersteller arbeiten deshalb mit zusätzlichen, im Randbereich angeordneten Temperiereinrichtungen, mit denen die Umgebungseffekte kompensiert werden sollen. Dadurch entsteht in der Herstellung und Wartung entsprechender Thermocycler entsprechender Zusatzaufwand.

Eine gute Temperaturhomogenität lässt sich zudem erreichen, wenn in allen Bereichen Thermoblock die erforderlichen Wärmeströme ermöglicht werden, und insbesondere auch in den Randbereichen des Thermoblocks eine effiziente Temperierung begünstigt wird. Der Einfluss der Umgebungstemperatur lässt sich zudem minimieren, wenn der Thermoblock eine möglichst hohe spezifische Wärmekapazität aufweist. Diese Anforderungen werden durch Thermoblöcke aus massiven Metall, typischer Weise Aluminium, erfüllt, in denen die Probengefäßaufnahmen und auch die weitere gewünschte äußere Form durch spanende Fertigungsverfahren erzeugt werden. Die massive Bauweise solcher Blocks führt zu einer hohen spezifischen Wärmekapazität und Homogenität. Andererseits führt die hohe spezifische Wärmekapazität auch zu einem langsamen Wechsel der Temperaturlevel und somit zu einer langen Gesamtprozessdauer der mit dem Thermoblock durchgeführten zyklischen Temperierprogramme sowie zu einem höheren Energieverbrauch. Das spanende Fertigungsverfahren limitiert zudem die Möglichkeiten der Optimierung der Blockstruktur.

Ein alternatives Verfahren der Herstellung eines Silberblocks erzeugt zunächst durch galvanische Abscheidung die Probengefäßaufnahmen, die in einem weiteren Schritt jeweils mit einer Grundplatte aus Silber verlötet werden. Ein funktioneller, materialsparender Blockaufbau ist das Resultat. Wie die Anmelderin der vorliegenden Erfindung in vergleichenden Studien ermittelt hat, lassen sich mit einem solchen Silberblock schnelle Temperaturwechsel erzielen Die Vielzahl der Herstellungsschritte ist aber nicht zuletzt auch eine Fehlerquelle, so dass diese Art der Fertigung relativ aufwändig ist.

Eine weitere Anforderung an Thermoblöcke ist eine ausreichende mechanische Belastbarkeit. Ein Thermocycler verwendet typischer Weise eine Druckplatte, mit der die Probengefäße von oben in die Probengefäßaufnahmen und gegen den Thermoblock gepresst werden. Dadurch wird sichergestellt, dass jedes Probengefäß vollständig mit der Innenseite der jeweiligen Probengefäßaufnahme in Kontakt steht, wodurch erst die homogene Temperierung aller vom Thermoblock aufgenommenen Proben ermöglicht wird.

Die der vorliegenden Erfindung zugrunde liegende Aufgabe besteht darin, einen effizienten Thermoblock mit möglichst homogener Temperaturverteilung sowie Verfahren zu dessen Herstellung und Optimierung bereitzustellen.

Die Erfindung löst diese Aufgabe durch den Thermoblock gemäß Anspruch 1, das Verfahren zu dessen Herstellung gemäß Anspruch 13 und das Verfahren zur Berechnung der geeigneten Formstruktur des Thermoblocks gemäß Anspruch 15.

Im Rahmen der Entwicklungsarbeit zur vorliegenden Erfindung wurde überraschend herausgefunden, dass sich nicht nur die Anforderungen an die thermischen Eigenschaften des Thermoblocks sondern zusätzlich auch die erforderliche mechanische Belastbarkeit eines Thermoblocks durch ein additives Fertigungsverfahren verwirklichen lassen. Die mittels dem additiven Fertigungsverfahren hergestellten Thermoblöcke bieten den Vorteil, dass eine integrale Bauweise mit materialsparender Bauweise kombinierbar ist, die zudem die erforderliche ausreichende mechanische Belastbarkeit bietet.

"Einstückig verbunden" oder "integral verbunden" bedeutet im Kontext dieser Erfindung, dass die beiden miteinander einstückig/integral verbundenen Abschnitte des Thermoblocks mittels eines einzigen additiven Fertigungsverfahrens insbesondere unter Verwendung des metallhaltigen Werkstoffs hergestellt wurden. Insbesondere werden im Falle einer solchen einstückigen Fertigung diese Abschnitte nicht als Fügeteile separat gefertigt, um dann -insbesondere in einem weiteren Verfahrensschritt- durch Fügen verbunden zu werden. Die einstückige Fertigung von Bauteilen ist allgemein auch als Integralbauweise bekannt, die Fertigung eines Bauteils durch Fügen verschiedener Fügepartner ist dagegen als Differenzialbauweise bekannt.

Additive Herstellungsverfahren beruhen oftmals auf der schichtweisen Verarbeitung eines granularen Werkstoffs. Aufgrund der daraus resultierenden Oberflächen- und Volumenstruktur ist ein im additiven Herstellungsverfahren erzeugter Thermoblock immer eindeutig unterscheidbar von einem Thermoblock, der in einem nicht-additiven Verfahren erzeugt wurde, z.B. in einem spanenden Fertigungsverfahren, ein galvanisches Verfahren, oder ein Gußverfahren.

Vorzugsweise wird selektives Laserschmelzen (englisch: Selective Laser Melting, SLM) als additives Fertigungsverfahren zur Herstellung des Thermoblocks eingesetzt. Ebenfalls vorzugsweise wird Elektronenstrahlschmelzen als additives Fertigungsverfahren zur Herstellung des Thermoblocks eingesetzt.

Beim selektiven Laserschmelzen (SLM) wird ein Laser zum lokalen Schmelzen von pulverförmigem Material (Metalle, Mischwerkstoffe) verwendet. Dabei wird der Laser computergesteuert auf Punkte einer pulvergefüllten Ebene gerichtet, die durch ein 3D-Modell definiert werden. Der Prozess beginnt mit dem Aufteilen von 3D-CAD-Dateidaten in ein Schichtmodell, dessen Schichten beispielsweise zwischen 10 und 100 Mikrometer dick sind, wobei ein 2D-Bild jeder Schicht erstellt wird. Dieses Dateiformat ist die branchenübliche STL-Datei, die für die meisten schichtbasierten 3D-Druck oder Stereolithografietechnologien verwendet wird. Diese Datei wird dann von einem Softwarepaket zur Dateivorbereitung geladen, das Parameter, Werte und gegebenenfalls Stützstrukturen als Maschinendaten zuweist. Diese Maschinendaten werden von einer SLM-Maschine interpretiert, um das Produkt, den Thermoblock, zu erstellen. Beim selektiven Laserschmelzen werden dünne Schichten von zerstäubtem feinem Metallpulver unter Verwendung eines Beschichtungsmechanismus gleichmäßig auf einer Substratplatte, üblicherweise Metall, verteilt, die sich in der vertikalen (Z) Achse bewegt. Dies geschieht in einer Kammer, die eine streng kontrollierte Inertgasatmosphäre enthält. Das Modell wird schichtweise erstellt. Jede 2D-Scheibe der Teilegeometrie wird durch selektives Schmelzen des Pulvers innerhalb der jeweiligen Schicht und mit der darunter liegenden Schicht mittels eines kontinuierlichen oder gepulsten Hochleistungslaserstrahl verschmolzen. Die Laserenergie ist intensiv genug, um ein vollständiges Schmelzen (Schweißen) der Partikel zu ermöglichen, um festes Metall zu bilden. Der Vorgang wird Schicht für Schicht wiederholt, bis das Teil fertig ist. Im Bereich der Kammer befinden sich eine Materialausgabeplattform, eine Bauplattform sowie eine Überstreichklinge, mit der neues Pulver über die Bauplattform bewegt wird. Eine zur Herstellung des erfindungsgemäßen Thermoblocks bzw. eine zur Durchführung des erfindungsgemäßen Herstellungsverfahrens geeignete kommerzielle SLM-Maschine ist die die EOS M 290, erhältlich über EOS GmbH, Electro Optical Systems, 82152 Krailling, Deutschland. Das Unternehmen bezeichnet das dabei eingesetzte SLM als DMLS (Direct Metal Laser Sintering).

Es wird in der aktuellen Literatur statt des Begriffs "selektiven Laserschmelzen" auch teilweise der Begriff "Selektives Lasersintern (SLS)" synonym verwendet. Sintern ist der Vorgang des Verdichtens und Formens einer festen Materialmasse durch Wärme und/oder Druck, ohne sie bis zur vollständigen Verflüssigung zu schmelzen. Beim selektiven Laserschmelzen wird allgemein davon ausgegangen, dass der granulare Werkstoff vollständig geschmolzen wird. Im Rahmen der Beschreibung der vorliegenden Erfindung bezeichnen beide Begriffe synonym dasselbe Verfahren, falls nicht Unterschiede ausdrücklich hervorgehoben werden; es wird dabei vorliegend davon ausgegangen, dass die Begriffe SLM oder SLS jeweils solche Verfahren bezeichnen, bei denen der granulare Werkstoff entweder teilweise oder vollständig geschmolzen wird, um die Einheitlichkeit, also die integrale Bauweise des zu fertigenden Thermoblocks zu gewährleisten. Es ist aber auch möglich und bevorzugt, dass das Verfahren zur Herstellung des erfindungsgemäßen Thermoblocks einen oder mehrere Schritte vorsieht, während derer der noch nicht vollständig fertiggestellte bzw. der noch nicht vollständig modellierte Thermoblock im jeweiligen Herstellungsstadium mit einer hohen Temperatur behandelt wird, um ein teilweises oder fast vollständiges Schmelzen des Thermoblocks oder zumindest von Abschnitten des Thermoblocks zu erreichen. Insbesondere kann durch den Grad des Erhitzens die Porösität des Materials des fertigen Thermoblocks beeinflusst bzw. gesteuert werden.

Vorzugsweise weist der Thermoblock eine, mehrere oder eine Vielzahl von Probengefäßaufnahmen auf, die mittels des additiven Fertigungsverfahrens unter Verwendung eines metallhaltigen Werkstoffs miteinander verbunden und/oder integral mit einem Basisabschnitt bzw. einer Grundplatte verbunden hergestellt wurden. Vorzugsweise weist das Verfahren zur Herstellung des Thermoblocks den Schritt auf, eine, mehrere oder eine Vielzahl von Probengefäßaufnahmen mittels des additiven Fertigungsverfahrens integral miteinander verbunden und/oder integral mit einem Basisabschnitt bzw. mit einer Grundplatte verbunden herzustellen. Bei frei auf einem Basisabschnitt bzw. auf einer Grundplatte stehenden, also nicht aneinander abgestützten Probengefäßaufnahmen, wird die integrale Fertigung mittels additivem Verfahren besonders vorteilhaft, da durch die integrale Fertigung keine individuellen Materialinhomogenitäten im Übergangsbereich zwischen Basisabschnitt und Probengefäßaufnahme auftreten, wie dies z.B. in einem zweischrittigen Herstellungsverfahren möglich sein kann, bei dem zuerst die Komponenten Basisabschnitt und Probengefäßaufnahmen separat gefertigt werden und danach verbunden werden. Durch den homogenen Materialübergang im Falle der integralen Fertigung entsprechen die Wärmeübertragungseigenschaften des Thermoblocks besonders zuverlässig den modellhaften Eigenschaften, wie sie beispielsweise zuvor durch eine Simulationsverfahren ermittelt wurden.

Eine Probengefäßaufnahme dient dazu, den Wärmeaustausch zwischen einer Temperiereinrichtung und jeder Probe zu ermöglichen, die in Anwendungen des Thermoblocks üblicher Weise in einem in der Probengefäßaufnahme angeordneten Probengefäß enthalten ist. Dazu weist jede Probengefäßaufnahme eine Innenseite auf, die einen Kontaktabschnitt aufweist, mittels dem das in der Probengefäßaufnahme angeordnete Probengefäß kontaktiert wird. Für ein möglichst schnelles Temperieren, also geregeltes Heizen oder Kühlen auf eine Zieltemperatur, ist eine möglichst große Wärmeaustauschfläche erwünscht, so dass der Kontaktabschnitt möglichst großflächig sein sollte. Andererseits ergaben die der vorliegenden Erfindung zugrunde liegenden Untersuchungen, dass ein Erwärmen des Probengefäßes nur dann proportional die Temperierrate erhöht, wenn und insofern die der dem Kontaktabschnitt gegenüberliegende Innenseite des Probengefäßes auch von der flüssigen Probe kontaktiert wird, wobei "gegenüberliegend" insbesondere senkrecht zur Fläche des Kontaktabschnitts gegenüberliegend bedeutet. Der Wärmefluss ist senkrecht zur Gefäßwand am effizientesten, die deshalb meistens möglichst dünn ausgeführt sind. Die Untersuchungen berücksichtigten auch, dass Anwender eines Thermoblocks in der Regel typische Füllhöhen in den Probengefäßen verwenden, die insbesondere in der Regel deutlich niedriger als das maximale Füllungsvermögen der Probengefäße sind. In der PCR werden oftmals Proben mit einem Volumen von 25 µl, 70 µl, 100 µl, 150 µl eingesetzt. Dieser untere Teil eines Kontaktabschnitts, dessen gegenüberliegende Innenseite des Probengefäßes in dessen Aufnahmeposition von der flüssigen Probe kontaktiert wird, wird vorliegend auch als Füllhöhenabschnitt bezeichnet, - während der obere Teil des Kontaktabschnitts, dessen gegenüberliegende Innenseite des Probengefäßes in dessen Aufnahmeposition nicht von der flüssigen Probe kontaktiert wird, als Leerabschnitt bezeichnet wird.

Es ergibt sich, dass es zum Zweck einer raschen Wärmeübertragung nicht notwendig ist, die Höhe der Kontaktabschnitte größer zu dimensionieren, als dies der typischen Füllhöhe der Probengefäße entspricht, wenn diese bestimmungsgemäß in den Probengefäßaufnahmen des Thermoblocks angeordnet sind. Es erweist sich zudem als vorteilhaft, den Füllhöhenabschnitt zum Zwecke einer effizienten Wärmeübertragung mittels ausreichend großer Wärmeübertragungsquerschnitte thermisch mit der Unterseite (ersten Seite) des Basisabschnitts bzw. der Grundplatte des Thermoblocks zu koppeln, was insbesondere durch eine ausreichend große Wanddicke des Füllhöhenabschnitts, insbesondere auch des unteren Endabschnitts, der Probengefäßaufnahme gelingt. Da der Leerabschnitt nicht effizient zum Temperieren der im Probengefäß angeordneten Probe beiträgt, kann im Prinzip auf ein Temperieren dieses Leerabschnitts verzichtet werden. Gleichzeitig erweist es sich als vorteilhaft, die Masse der Probengefäßaufnahme im Leerabschnitt gering zu halten, um ein unnötiges Temperieren dieses Massenbereichs - und damit unnötigen Energieverbrauch und eine Verlängerung der Temperierdauer- zu vermeiden, oder in anderen Worten, um eine parasitäte Wärmekapazität der Probengefäßaufnahme zu eliminieren.

Der Thermoblock weist vorzugsweise einen Basisabschnitt auf, auf dem eine oder mehrere bzw. eine Vielzahl von Probengefäßaufnahmen angeordnet sind, insbesondere integral verbunden sind. Der Basisabschnitt ist vorzugsweise ein Plattenabschnitt des Thermoblocks, bzw. ist eine Platte, die insbesondere im Wesentlichen quaderförmig und insbesondere flach ist. Die Höhe der Platte ist vorzugsweise kleiner als die Höhe der Probengefäßaufnahmen. Der Plattenabschnitt weist eine obere Seite und eine untere Seite auf. Die Platte wird auch als Grundplatte bezeichnet.

Die Probengefäßaufnahmen sind vorzugsweise in Reihen und Spalten angeordnet, insbesondere in einer rechteckigen Gitteranordnung, wobei an den Kreuzungspunkten des Gitters die Zentren der vorzugsweise um eine vertikale Längsachse rotationssymmetrischen Probengefäßaufnahmen liegen. Eine rechteckige Gitteranordnung bezeichnet vorliegend insbesondere ein Gitter, das regelmäßig aus Gitterzellen mit derselben rechteckigen, insbesondere quadratischen, Grundform aufgebaut ist. Die Gitteranordnung entspricht vorzugsweise dem SBS-Standard, wie nachfolgend noch beschrieben. Die Anzahl der Probengefäßaufnahmen (und/oder die bevorzugte Gitteranordnung) kann auch 8 (2x4), 16 (2x8 oder 4x4), 32 (4x8) oder 64 (8x8 oder 4x16) sein. Die Gitteranordnung kann zudem einem Teilbereich einer SBS-konformen Gitteranordnung entsprechen, beispielsweise der Hälfte einer SBS-Gitteranordnung mit 8x12 Gitterpunkten, also aufweisend 48 Gitterpunkte. Die Gitteranordnung und die Probengefäßaufnahmen sind vorzugsweise so eingerichtet und insbesondere geformt, dass Standard-Probengefäße in den Probengefäßaufnahmen anordenbar sind, z.B. wie sie nachfolgend beschrieben sind. Die Gitteranordnung muss nicht rechteckig sein, insbesondere muss die Geometrie der einzelnen Gitterzelle nicht rechteckig sein. Sie kann grundsätzlich einem strukturierten oder einem unstrukturierten Gitter entsprechen.

Typische Probengefäße sind insbesondere solche, die für die PCR geeignet sind. Es sind zumeist Einweg-Kunststoffgefäße. Es kann sich um Einzelgefäße mit oder ohne Deckelkappe handeln, oder um Mehrfachgefäße, insbesondere Mikrotiterplatten. Letztere sind vorzugsweise für die PCR geeignet, und werden in diesem Fall als PCR-Platten bezeichnet.

Einzelgefäße weisen typischer Weise maximale Füllvolumina von 0,1 ml, 0,2 ml oder 0,5 ml auf, grundsätzlich sind Füllvolumina zwischen 10 µl und 2 ml möglich. Bevorzugt liegen die Füllvolumina zwischen 10 µl und 200 µl. Einzelgefäße zur Aufnahme in den Thermoblock weisen vorzugsweise seitliche Außenwände (und auch Innenwände) auf, die konusförmig verlaufen, damit das Einsetzen in den Thermoblock und die Entnahme problemlos möglich sind, und damit in diesem Bereich eine effiziente Wärmeübertragung stattfinden kann. Dieser Bereich weist insbesondere die Kontaktabschnitte für die Wärmeübertragung auf. Die Böden der Einzelgefäße können wahlweise insbesondere folgende Formen aufweisen: F-Boden (Flachboden), C-Boden (Flachboden mit minimal abgerundeten Ecken), V-Boden (konisch zulaufender Boden) und U-Boden (U-förmige Vertiefung).

Mehrfachgefäße, insbesondere Mikrotiterplatten bzw. PCR-Platten sind vorzugsweise Standard-Probengefäße. Solche Mikrotiterplatten bzw. PCR-Platten enthalten viele voneinander isolierte Näpfchen (Kavitäten, englisch: wells) in Reihen und Spalten, so dass sich eine rechteckige Gitteranordnung ergibt. Die genauen Abmessungen (Länge×Breite×Höhe) betragen gemäß ANSI-Standard auf Empfehlung der Society for Biomolecular Screening (SBS) 127,76 mmx85,48 mmx14,35 mm (SBS Standard "AN-SI/SBS 4-2004"). Die Mikrotiterplatten bzw. PCR-Platten können gemäß Standard verschiedene Formate aufweisen, alle auf der gleichen Grundfläche und zum Teil mit variabler Höhe (Anzahl Näpfchen, Gitteranordnung, typische Füllvolumen in ml): 6, 2×3, 2-5;12, 3×4, 2-4; 24, 4×6, 0,5-3; 48, 6×8, 0,5-1,5; 96, 8×12, 0,1-0,3; 384, 16×24, 0,03-0,1; 1536, 32x48 0,005-0,015; 3456, 48×72, 0,001-0,005. Es können auch andere Formate verwendet werden, die nicht Standard-gemäß sind. Auch die Näpfchen zur Aufnahme in den Thermoblock weisen vorzugsweise seitliche Außenwände (und auch Innenwände) auf, die konusförmig verlaufen, damit das Einsetzen in den Thermoblock und die Entnahme problemlos möglich sind, und damit in diesem Bereich eine effiziente Wärmeübertragung stattfinden kann. Dieser Bereich weist insbesondere die Kontaktabschnitte für die Wärmeübertragung auf. Die Böden der Näpfchen können wahlweise insbesondere folgende Formen aufweisen: F-Boden (Flachboden), C-Boden (Flachboden mit minimal abgerundeten Ecken), V-Boden (konisch zulaufender Boden) und U-Boden (U-förmige Vertiefung).

Die Angaben "oben" und "unten" beziehen sich im Rahmen der Beschreibung der Erfindung in der Regel auf die Richtung der Gravitation, da die Probengefäße bestimmungsgemäß mit flüssiger Probe gefüllt sind, die eine horizontale Lagerung des Basisabschnitts erfordert, so dass die zentrale Längsachse jeder Probengefäßaufnahme vertikal angeordnet ist. Als Vorderseite oder vordere Seite des Thermoblocks wird die Seite bezeichnet, die zur Vorderseite des Laborgeräts gerichtet ist - insbesondere zum Benutzer nach vorne gerichtet ist, wenn dieser vor dem Laborgerät arbeitet-, wenn der Thermoblock bestimmungsgemäß in ein Laborgerät, insbesondere einen PCR-Thermocycler eingebaut ist, und als Rückseite oder hintere Seite des Thermoblocks wird die der Rückseite des Laborgeräts zugewandte Seite bezeichnet - insbesondere vom Benutzer weg nach hinten gerichtet ist, wenn dieser vor dem Laborgerät arbeitet-, wenn der Thermoblock bestimmungsgemäß in ein Laborgerät, insbesondere einen PCR-Thermocycler eingebaut ist. Analog lassen sich die "linke" und "rechte" Seite eines Thermoblocks aus Sicht eines Benutzers definieren, der frontal vor dem Laborgerät mit dem bestimmungsgemäß eingebauten Thermoblock positioniert ist diesen "von links nach rechts" betrachtet. Die untere Seite eines Thermoblocks oder eines seiner Bestandteile wird auch als deren erste Seite bezeichnet, die dieser gegenüberliegende, obere Seite eines Thermoblocks oder eines seiner Bestandteile wird auch als deren zweite Seite bezeichnet.

Ein Basisabschnitt bzw. eine Grundplatte wird vorzugsweise mit wenigstens einem der nachfolgend genannten Gestaltungsmerkmale hergestellt, insbesondere additiv gefertigt. Es ist bevorzugt, dass die mindestens eine Probengefäßaufnahme in einem additiven Herstellungsverfahren, insbesondere ohne Unterbrechung dieses Herstellungsverfahrens, gefertigt wurde. Es ist aber auch möglich und bevorzugt, dass der Basisabschnitt bzw. die Grundplatte separat gefertigt werden, durch ein additives Herstellungsverfahren oder ein anderes Herstellungsverfahren, z.B. durch ein Gußverfahren, ein spanendes Verfahren, oder ein galvanisches Verfahren.

Die Grundplatte weist eine erste Plattenseite auf, die zur thermischen Kopplung mit einer oder mehrerer Temperiereinrichtungen eingerichtet ist, und eine zweite, der ersten Plattenseite gegenüberliegende zweite Plattenseite, die vorzugsweise mit einer Vielzahl von Probengefäßaufnahmen zur Aufnahme und Temperierung einer Vielzahl von Laborprobengefäßen einstückig verbunden ist. Die erste Plattenseite ist vorzugsweise planar. Die zweite Plattenseite ist vorzugsweise planar, und weist mindestens eine Übergangsquerschnittsfläche auf, die den Übergang der Grundplatte mit der mindestens eine Probengefäßaufnahme darstellt. Eine Grundplatte kann mindestens eine Öffnung und/oder mindestens eine Aussparung und/oder mindestens einen Vorsprungsabschnitt aufweisen, wobei letzterer aus einer planaren ersten oder zweiten Seite hervorstehen kann. Solche Abweichungen von rein planaren Seiten der Platte können vorgesehen sein, wenn dies der gewünschten Wärmeverteilung dient, insbesondere wenn dies der homogenen Temperaturverteilung der Probengefäßaufnahmen, insbesondere der gleichen Temperierung der Kontaktabschnitte der Probengefäßaufnahmen dient.

Die Grundplatte weist vorzugsweise, jeweils zueinander senkrecht, eine Länge I, eine Breite b und eine Höhe h auf, die zur weiteren Erläuterung entlang der Achsen x, y, z eines kartesischen Koordinatensystem entsprechend x/l, y/b, z/h ausgerichtet sein können. Länge und Breite der Grundplatte sind vorzugsweise so dimensioniert, dass Standard-Probengefäße in entsprechenden Probengefäßaufnahmen oberhalb der Grundplatte anordenbar sind. Bevorzugte Maße der Länge sind zwischen 50 mm bis 260 mm oder zwischen 60 mm bis 160 mm, bevorzugte Maße der Breite sind zwischen 40 mm bis 180 mm oder zwischen 60 mm bis 120 mm. Bevorzugte Maße der Höhe sind zwischen 1,0 mm bis 15,0 mm oder zwischen 0,3 mm bis 0,8 mm. Die Länge, Breite und/oder Höhe wird entweder so gemessen, dass eventuelle seitliche Vorsprünge der im Wesentlichen quaderförmigen Grundplatte nicht berücksichtigt werden oder dass die Maße als maximale Ausdehnung der Grundplatte entlang der x-Achse (zur Messung von I), als maximale Ausdehnung der Grundplatte entlang der y-Achse (zur Messung von b) oder als maximale Ausdehnung der Grundplatte entlang der z-Achse (zur Messung von h) definiert werden.

Vorzugsweise weist der Thermoblock eine, mehrere oder eine Vielzahl von Probengefäßaufnahmen auf, die mittels des additiven Fertigungsverfahrens unter Verwendung eines metallhaltigen Werkstoffs miteinander verbunden und/oder integral mit einem Basisabschnitt bzw. einer Grundplatte verbunden hergestellt wurden. Vorzugsweise weist das Verfahren zur Herstellung des Thermoblocks den Schritt auf, eine, mehrere oder eine Vielzahl von Probengefäßaufnahmen mittels des additiven Fertigungsverfahrens integral miteinander verbunden und/oder integral mit einem Basisabschnitt bzw. mit einer Grundplatte verbunden herzustellen.

Vorzugsweise weist der Thermoblock eine Mehrzahl (größer oder gleich zwei) oder eine Vielzahl (größer oder gleich sechs) von Probengefäßaufnahmen auf, die insbesondere nebeneinander entlang einer Ebene angeordnet sind, die insbesondere parallel zu einer planaren ersten Seite der Grundplatte des Thermoblocks verläuft. Die vorzugsweise kreisförmigen Öffnungen der Probengefäßaufnahmen am oberen Ende der Probengefäßaufnahmen liegen vorzugsweise alle parallel zu der planaren ersten Seite der Grundplatte des Thermoblocks. Die Probengefäßaufnahmen sind vorzugsweise in einem Reihen und Spalten aufweisenden, rechteckigen Gitter angeordnet.

Eine Probengefäßaufnahme wird vorzugsweise mit wenigstens einem der nachfolgend genannten Gestaltungsmerkmale hergestellt, insbesondere additiv gefertigt. Es ist bevorzugt, dass die mindestens eine Probengefäßaufnahme in einem additiven Herstellungsverfahren, insbesondere integral und/oder insbesondere ohne Unterbrechung dieses Herstellungsverfahrens, gefertigt wurde. Vorzugsweise wurden mindestens zwei Probengefäßaufnahmen in einem additiven Herstellungsverfahren, insbesondere integral und/oder ohne Unterbrechung dieses Herstellungsverfahrens, gefertigt. Vorzugsweise wurden der Basisabschnitt, insbesondere die Grundplatte, und die mindestens eine Probengefäßaufnahme durch ein additives Herstellungsverfahren integral und/oder insbesondere ohne Unterbrechung dieses Herstellungsverfahrens, gefertigt.

Es ist aber auch möglich und bevorzugt, dass die mindestens eine Probengefäßaufnahme separat gefertigt wird, durch ein additives Herstellungsverfahren oder ein anderes Herstellungsverfahren, z.B. durch ein Gußverfahren, ein spanendes Verfahren, oder ein galvanisches Verfahren. Probengefäßaufnahmen können einzeln oder mehrere Probengefäßaufnahmen können in Gruppen integral gefertigt werden, oder alle Probengefäßaufnahmen können als integrale Bauteile gemeinsam gefertigt werden. Es ist dann bevorzugt dass die mindestens eine Probengefäßaufnahme nach ihrer Fertigung -einzeln, in Gruppen oder als Gesamtbauteil- mit dem Basisabschnitt verbunden werden. Es ist möglich und bevorzugt, dass der Basisabschnitt durch additive Fertigung der mindestens einen, separat gefertigen, Probengefäßaufnahme hinzugefügt wird. Dabei ist es möglich, dass das Material der mindestens einen Probengefäßaufnahme angeschmolzen wird, um nachfolgend die erste Materialschicht des Basisabschnitts hinzuzufügen, der dann sukzessive aufgebaut wird. Es ist auch möglich und bevorzugt, dass die mindestens eine Probengefäßaufnahme dem separat gefertigten Basisabschnitt durch additive Fertigung hinzugefügt wird.

Eine Probengefäßaufnahme weist vorzugsweise ein Innenvolumen auf, das der Aufnahme eines Probengefäßabschnitts dient. Durch Aufnahme des Probengefäßabschnitts eines Probengefäßes in eine Aufnahmeposition wird zwischen dem Probengefäß und der Probengefäßaufnahme ein Kontakt hergestellt. Dieser Kontakt erfolgt über eine Kontaktfläche des Kontaktabschnitts der Probengefäßaufnahme. Das Innenvolumen ist vorzugsweise von mindestens einer Aufnahmewand umgeben, und ist insbesondere von einer Innenseite der mindestens einen Aufnahmewand bzw. der Probengefäßaufnahme begrenzt. Die Aufnahmewand kann funktionell in zwei oder mehr Wandabschnitte unterteilt sein.

Eine Probengefäßaufnahme weist vorzugsweise eine zentrale Längsachse A auf, entlang der sich die Probengefäßaufnahme erstreckt. Die Längsachse A verläuft vorzugsweise senkrecht zu einer vorzugsweise planaren zweiten Seite oder einem planaren Abschnitt der zweiten Seite eines Basisabschnitts bzw. einer Grundplatte. Die Probengefäßaufnahme ist vorzugsweise rotationssymmetrisch bezüglich dieser Längsachse A ausgebildet- dies ist im Stand der Technik üblich. Es ist aber auch möglich und bevorzugt, dass die Probengefäßaufnahme vorzugsweise nicht rotationssymmetrisch bezüglich dieser Längsachse A ausgebildet ist.

Die Probengefäßaufnahme weist vorzugsweise einen unteren Endabschnitt auf, über den die Probengefäßaufnahme mit dem Basisabschnitt bzw. einer Grundplatte verbunden ist, insbesondere integral verbunden ist. Der untere Endabschnitt kann ein Volumenbereich der Probengefäßaufnahme sein, der unterhalb eines Wandabschnitts angeordnet ist, insbesondere ein Fußabschnitt der Probengefäßaufnahme, oder kann eine Fläche sein. Diese Fläche, die Bestandteil des unteren Endabschnitts ist und ebenso die Übergangsquerschnittsfläche bzw. die Verbindung zwischen Probengefäßaufnahme und Basisabschnitt bzw. Grundplatte bildet, ist vorzugsweise kreisförmig, kann aber auch eine andere Form aufweisen. Der untere Endabschnitt kann dadurch definiert sein, dass er den Kontaktabschnitt nicht enthält, insbesondere weder vollständig noch anteilig.

Die Probengefäßaufnahme weist vorzugsweise einen Wandabschnitt auf, der insbesondere im Wesentlichen bzw. größtenteils oberhalb des unteren Endabschnitts angeordnet ist. Die Probengefäßaufnahme weist vorzugsweise einen oberen Endabschnitt auf, welcher der Öffnungsabschnitt ist, der insbesondere oberhalb des Wandabschnitts angeordnet ist. Der Wandabschnitt ist vorzugsweise konisch geformt, wobei sich der Konus von oben nach unten verjüngt. Der Wandabschnitt kann insbesondere als jener, das Innenvolumen der Probengefäßaufnahme begrenzende, Abschnitt der Probengefäßaufnahme entlang der Längsachse A definiert werden, dessen Innenseite konusförmig ist. Der untere Endabschnitt kann insbesondere einen, insbesondere auch das Innenvolumen der Probengefäßaufnahme begrenzenden, Abschnitt der Probengefäßaufnahme enthalten, dessen Innenseite nicht konusförmig ist. Der Wandabschnitt ist vorzugsweise als ein um die Rotationsachse A (Längsachse A) rotationssymmetrisch verlaufender Abschnitt eines Hohlkegels geformt. Dadurch lassen sich die komplementär konusförmig geformten Probengefäße einfach einsetzen und entnehmen.

Der Wandabschnitt weist vorzugsweise einen ersten, unteren Wandteilabschnitt auf, der einen Teil des Kontaktabschnitts bildet, insbesondere den unteren Abschnitt des Kontaktabschnitts bildet, und der insbesondere entlang der Längsachse A betrachtet oberhalb des unteren Endabschnitts liegt und insbesondere unterhalb eines zweiten, oberen Wandteilabschnitts liegt. Der untere Wandteilabschnitt ist vorzugsweise der Füllhöhenabschnitt. Der Wandabschnitt weist vorzugsweise mindestens einen zweiten, oberen Wandteilabschnitt auf, der keinen Bestandteil des Kontaktabschnitts enthält. Der obere Wandteilabschnitt ist vorzugsweise der Leerabschnitt. Der untere Wandteilabschnitt kann dadurch definiert sein, dass dieser eine größere Dicke aufweist als der obere Wandteilabschnitt. Die genannten Dicken müssen nicht jeweils entlang des Wandabschnitts konstant sein. Vorzugsweise erhöht sich die Dicke des unteren Wandteilabschnitts mit abnehmendem Abstand zum unteren Endabschnitt, betrachtet entlang der Längsachse A. Der untere Wandteilabschnitt kann ein Fußabschnitt der Probengefäßaufnahme sein, der sich nach unten verbreitert bzw. in Richtung des unteren Endabschnitts verbreitert bzw. einen zunehmenden Querschnitt aufweist, betrachtet senkrecht zur Längsachse A. Durch diese Verbreiterung wird insbesondere ein größerer Wärmefluss zwischen Basisabschnitt und Probengefäßaufnahme ermöglicht und zudem die Anordnung der Probengefäßaufnahme relativ zum Basisabschnitt gestützt. Der untere Wandteilabschnitt kann ein Bestandteil eines Fußabschnitts sein.

Die Probengefäßaufnahme weist vorzugsweise einen oberen Endabschnitt auf, der mit dem Wandabschnitt verbunden ist, insbesondere integral verbunden ist. Der obere Endabschnitt ist vorzugsweise der Öffnungsabschnitt, der auch die nach oben gerichtete, vorzugsweise kreisförmige Öffnung aufweist, durch die ein Probengefäß in die Probengefäßaufnahme eingeführt wird.

Die Höhe des unteren Endabschnitts kann zwischen 0,0 und 5,0 mm, vorzugsweise zwischen 0,0 und 3,0 mm und vorzugsweise zwischen 0,0 und 1,5 mm liegen.

Die Höhe des Wandabschnitts kann zwischen 0,0 und 15,0 mm, vorzugsweise zwischen 0,0 und 10,0 mm und vorzugsweise zwischen 0,0 und 8,0 mm liegen.

Die Höhe des ersten Wandteilabschnitt des Wandabschnitts kann zwischen 0,0 und 15,0 mm, vorzugsweise zwischen 0,0 und 10,0 mm und vorzugsweise zwischen 0,0 und 8,0 mm liegen.

Die Höhe des zweiten Wandteilabschnitt des Wandabschnitts kann zwischen 0,0 und 15,0 mm, vorzugsweise zwischen 0,0 und 10,0 mm und vorzugsweise zwischen 0,0 und 8,0 mm liegen. Die Höhe des zweiten Teilabschnitts kann die Höhe des ersten Teilabschnitts übersteigen, oder sie kann diese unterschreiten, oder sie kann gleich sein.

Die Höhe des oberen Endabschnitts kann zwischen 0,0 und 5,0 mm, vorzugsweise zwischen 0,0 und 3,0 mm und vorzugsweise zwischen 0,0 und 1,5 mm liegen.

Die Höhe kann jeweils auch jeden der vorstehend genannten Werte betragen oder kann zumindest den kleineren oder den größeren Wert betragen, während der jeweils andere Wert ausgeschlossen sein kann, oder alle genannten Werte können ausgenommen sein.

Bei herkömmlichen Thermoblöcken sind alle Probengefäßaufnahmen, bzw. -im Falle von gefrästen Thermoblöcken- alle Blockabschnitte, welche die Probengefäßaufnahmen enthalten, gleich ausgebildet, insbesondere gleich geformt und in derselben Form an einem Basisabschnitt angeordnet. Durch das additive Fertigungsverfahren wird ermöglicht, dass jeder Abschnitt der Probengefäßaufnahme je nach Anforderung individuell gestaltet, insbesondere geformt wird. Durch das additive Fertigungsverfahren wird zudem ermöglicht, dass jede Probengefäßaufnahme je nach Anforderung individuell gestaltet wird, oder dass bestimmte Gruppen von Probengefäßaufnahmen individuell gestaltet, insbesondere geformt, werden, so dass die Probengefäßaufnahmen innerhalb derselben Gruppe dieselbe Form aufweisen und/oder in derselben Form an einem Basisabschnitt angeordnet sind. "Individuell gestaltet" bedeutet, dass die Probengefäßaufnahme anders geformt ist und/oder zumindest mit anders geformten Fußabschnitt an einem Basisabschnitt angeordnet ist als andere Probengefäßaufnahmen oder dass die Probengefäßaufnahmen einer Gruppe anders geformt sind und/oder zumindest mit anders geformten Fußabschnitt an einem Basisabschnitt angeordnet sind als die Probengefäßaufnahmen einer anderen Gruppe.

Insbesondere wenn mehrere Probengefäßaufnahmen nebeneinander angeordnet sind, insbesondere in einer rechteckigen Gitteranordnung, bestehen folgende jeweils bevorzugte Ausgestaltungen:
Es sind vorzugsweise die randständigen Probengefäßaufnahmen anders geformt als die nicht-randständigen Probengefäßaufnahmen, insbesondere anders geformt als die Probengefäßaufnahmen im zentralen Innenbereich der Probengefäßaufnahmen-Anordnung. Es sind vorzugsweise die in den Ecken der Anordnung positionierten Probengefäßaufnahmen anders geformt als die randständigen Probengefäßaufnahmen und/oder als die nicht-randständigen Probengefäßaufnahmen. Als randständig angeordnet gelten solche Probengefäßaufnahmen, die am Rand eines Basisabschnitts, insbesondere der rechteckigen Grundplatte angeordnet sind und dort deshalb weniger benachbarte Probengefäßaufnahmen aufweisen als die nicht-randständig, zentraler angeordneten Probengefäßaufnahmen im zentralen Innenbereich der Probengefäßaufnahmen-Anordnung.
Es sind vorzugsweise die unteren Endabschnitte der randständigen Probengefäßaufnahmen anders geformt als die unteren Endabschnitte der nicht-randständigen Probengefäßaufnahmen, insbesondere anders geformt als die unteren Endabschnitte der Probengefäßaufnahmen im Innenbereich der Probengefäßaufnahmen-Anordnung. Es sind vorzugsweise die unteren Endabschnitte der in den Ecken der Anordnung positionierten Probengefäßaufnahmen anders geformt als die unteren Endabschnitte der randständigen Probengefäßaufnahmen und/oder als die unteren Endabschnitte der nicht-randständigen Probengefäßaufnahmen.
Es sind vorzugsweise die Wandabschnitte der randständigen Probengefäßaufnahmen anders geformt als die Wandabschnitte der nicht-randständigen Probengefäßaufnahmen, insbesondere anders geformt als die Wandabschnitte der Probengefäßaufnahmen im Innenbereich der Probengefäßaufnahmen-Anordnung. Es sind vorzugsweise die Wandabschnitte der in den Ecken der Anordnung positionierten Probengefäßaufnahmen anders geformt als die Wandabschnitte der randständigen Probengefäßaufnahmen und/oder als die Wandabschnitte der nicht-randständigen Probengefäßaufnahmen. Durch die unterschiedliche Gestaltung lässt sich der Wärmefluss bzw. die Wärmekapazität des Thermoblocks abhängig von der Position im Thermoblock beeinflussen.

Es weisen vorzugsweise die unteren Endabschnitte der randständigen Probengefäßaufnahmen ein größeres Volumen bzw. eine größere Masse auf als die unteren Endabschnitte der nicht-randständigen Probengefäßaufnahmen, insbesondere ein größeres Volumen bzw. eine größere Masse als die unteren Endabschnitte der Probengefäßaufnahmen im Innenbereich der Probengefäßaufnahmen-Anordnung. Es weisen vorzugsweise die unteren Endabschnitte der in den Ecken der Anordnung positionierten Probengefäßaufnahmen ein größeres Volumen bzw. eine größere Masse als die unteren Endabschnitte der randständigen Probengefäßaufnahmen und/oder als die unteren Endabschnitte der nicht-randständigen Probengefäßaufnahmen. Durch diese Ausgestaltungen lässt sich der Wärmefluss und die Wärmekapazität in die genannten Probengefäßaufnahmen unterschiedlich gestalten, insbesondere im Randbereich des Thermoblocks erhöhen, nachdem die Randbereiche dem Einfluss der meist deutlich niedrigeren Umgebungstemperatur unterliegen.

Ein unterer Endabschnitt einer, mehrerer oder aller Probengefäßaufnahmen ist vorzugsweise so geformt, dass er sich zumindest abschnittsweise ausgehend von einem oberen Abschnitt der Probengefäßaufnahme, insbesondere des Wandabschnitts, bis zum Basisabschnitt nach unten verbreitert. Der so definierte Fußabschnitt ermöglicht einen größeren Wärmefluss zwischen Probengefäßaufnahme und Wandabschnitt, wodurch die Probengefäßaufnahme mit Fußabschnitt schneller temperierter ist als eine Probengefäßaufnahme ohne Fußabschnitt. Zudem verstärkt der Fußabschnitt die Position der Probengefäßaufnahme am Basisabschnitt gegenüber mechanischen Einwirkungen.

Der Fußabschnitt ist vorzugsweise konusartig geformt, wobei ein durch die Längsachse A verlaufender vertikaler Querschnitt, insbesondere jeder durch die Längsachse A verlaufende vertikale Querschnitt der Außenseite des Fußabschnitts als eine gerade Linie geformt sein kann, aber auch als nicht-gerade Linie geformt sein kann, insbesondere konkav geformt sein kann.

Eine Probengefäßaufnahme ist vorzugsweise becherförmig, d.h., die Probengefäßaufnahme ist dann wie ein Becher mit nach oben gerichteter Öffnung ausgebildet.

Eine Probengefäßaufnahme, mehrere Probengefäßaufnahmen oder alle Probengefäßaufnahmen des Thermoblocks können ausschließlich mittels ihres Wandabschnitts oder unteren Endabschnitts mit dem Basisabschnitt verbunden sein, insbesondere ohne dass oberhalb des Basisabschnitts -und insbesondere unterhalb des oberen Endabschnittshorizontal verlaufende Verbindungsabschnitte vorgesehen sind, die benachbarte Probengefäßaufnahmen verbinden. Solche Probengefäßaufnahmen werden auch als freistehend bezeichnet.

Im oberen Endabschnitt können mehrere oder alle Probengefäßaufnahmen durch eine Lochplatte verbunden sein, wobei in einem Loch der Lochplatte jeweils eine Probengefäßaufnahme bzw. deren oberer Endabschnitt oder deren Öffnung angeordnet sein können. Die Probengefäßaufnahmen einer solchen Anordnung werden nicht als freistehend bezeichnet, da sie sich über Verbindungselement(e), hier die Lochplatte, aneinander abstützen.

Vorzugsweise weist der Thermoblock einen Basisabschnitt auf und einen Probengefäßabschnitt, wobei in letzterem die mindestens eine Probengefäßaufnahme angeordnet sind. Der Basisabschnitt und/oder der Probengefäßabschnitt sind vorzugsweise im Wesentlichen quaderförmig, indem insbesondere der Basisabschnitt die Form einer quaderförmigen Platte haben kann und indem insbesondere die Probengefäßaufnahmen des Probengefäßabschnitts einen im Wesentlichen quaderförmigen Bereich aufspannen. Der Basisabschnitt und der Probengefäßabschnitt können insbesondere im Wesentlichen innerhalb eines Übergangsbereichs miteinander verbunden sein, der als Ebene - bezeichnet als Übergangsebene- ausgebildet sein kann, oder als plattenförmiger Übergangsbereich, indem z.B. verschiedene Probengefäßaufnahmen in unterschiedlichen Höhen am Basisabschnitt beginnen. Es ist auch möglich, dass der Thermoblock keinen Basisabschnitt aufweist, sondern durch den Probengefäßabschnitt gebildet wird, dessen Probengefäßaufnahmen durch Verbindungsabschnitte verbunden sind, insbesondere durch sich horizontal zwischen benachbarten Probengefäßaufnahmen erstreckende und diese verbindende Verbindungsabschnitte, insbesondere durch sich horizontal zwischen den unteren Endabschnitten und/oder Wandabschnitten und/oder oberen Endabschnitten benachbarter Probengefäßaufnahmen erstreckende und diese verbindende Verbindungsabschnitte. Diese Verbindungsabschnitte können insbesondere Bestandteile eines die Probengefäßaufnahmen verbindenden Gitternetzwerks oder mindestens einer Lochplatte sein, durch deren Löcher sich die Probengefäßaufnahmen erstrecken und mit dieser verbunden sind. Die genannten Verbindungsabschnitte können aber auch dann vorgesehen sein, wenn der Thermoblock einen Basisabschnitt enthält.

Der Probengefäßabschnitt weist mindestens einen oder mehrere Verbindungsabschnitte auf, die benachbarte Probengefäßaufnahmen verbinden. Diese Verbindungsabschnitte sind insbesondere sich horizontal zwischen benachbarten Probengefäßaufnahmen erstreckende und diese verbindende Verbindungsabschnitte, insbesondere sich horizontal zwischen den unteren Endabschnitten und/oder Wandabschnitten und/oder oberen Endabschnitten benachbarter Probengefäßaufnahmen erstreckende und diese verbindende Verbindungsabschnitte. Diese Verbindungsabschnitte können insbesondere Bestandteile eines die Probengefäßaufnahmen verbindenden Gitternetzwerks oder mindestens einer Lochplatte sein, durch deren Löcher sich die Probengefäßaufnahmen erstrecken und mit dieser verbunden sind. Die genannten Verbindungsabschnitte können aber auch dann vorgesehen sein, wenn der Thermoblock einen Basisabschnitt enthält.

Insbesondere wenn mehrere Probengefäßaufnahmen nebeneinander angeordnet sind und einen Probengefäßabschnitt bilden, insbesondere in einer rechteckigen Gitteranordnung, bestehen folgende jeweils bevorzugte Ausgestaltungen:
Es kann mindestens ein oder genau ein Verbindungsabschnitt zwischen unmittelbar benachbarten Probengefäßaufnahmen vorgesehen sein, insbesondere zwischen mehreren oder allen unmittelbar benachbarten Probengefäßaufnahmen. In einem rechteckigen Gitter von Probengefäßaufnahmen gelten jeweils zwei in einer Zeile des Gitters aufeinanderfolgende Probengefäßaufnahmen als unmittelbar benachbart, und jeweils zwei in einer Spalte des Gitters aufeinanderfolgende Probengefäßaufnahmen als unmittelbar benachbart. Es kann aber auch mindestens ein oder genau ein Verbindungsabschnitt zwischen diagonal benachbarten Probengefäßaufnahmen vorgesehen sein, insbesondere zwischen mehreren oder allen diagonal benachbarten Probengefäßaufnahmen. Befindet sich zwischen zwei Probengefäßaufnahmen eine weitere Probengefäßaufnahme, so gelten die ersten beiden Probengefäßaufnahmen nicht als benachbart.

Zwischen dem benachbarte Probengefäßaufnahmen verbindenden Verbindungsabschnitt und dem Basisabschnitt, dort insbesondere in der durch die Längsachsen dieser Probengefäßaufnahmen gebildeten Ebene, insbesondere also unterhalb des Verbindungsabschnitts, kann ein Leerraum vorgesehen sein. Dieser Verbindungsabschnitt kann insbesondere nicht direkt mit dem Basisabschnitt verbunden sein -indirekt ist der Verbindungsabschnitt über die Probengefäßaufnahmen mit dem Basisabschnitt verbunden. In diesem Fall trägt der Verbindungsabschnitt zum Kühlen der Probengefäßaufnahme über die Konvektion der Umgebungsluft bei, die den Verbindungsabschnitt umströmt. Dieser Verbindungsabschnitt bzw. diese Struktur eignet sich daher, um heißere Probengefäßaufnahmen zu kühlen und die Homogenität im Thermoblock zu verbessern. Strukturparameter, die den optimalen Wärmeentzug bestimmen, sind die Dicke des Verbindungsabschnitts bzw. der Struktur und der Abstand, insbesondere kleinste Abstand, des Verbindungsabschnitts bzw. der Struktur zum Basisabschnitt bzw. zur Grundplatte, die Masse und/oder die Oberfläche des Verbindungsabschnitts. Ein weiterer Nutzen dieses Verbindungsabschnitts bzw. Dieser Struktur zwischen den Probengefäßaufnahmen ist, dass sie dem Bauteil im Einzelfall die erforderliche Stabilität und Steifigkeit verleihen können. Die Verbindungsabschnitte bzw. die Strukturen liegen dann möglichst weit vom Bauteilschwerpunkt entfernt und können daher kleiner und/oder dünner ausgelegt werden. Ein weiterer Vorteil ist, dass hier der thermische Einfluss von kleinen Strukturen relativ gering ist. Die Wärme muss zuerst durch die Probeaufnahme fließen und erwärmt die Struktur folglich als letztes.

Es ist auch möglich und bevorzugt, dass zwischen dem benachbarte Probengefäßaufnahmen verbindenden Verbindungsabschnitt und dem Basisabschnitt, dort insbesondere in der durch die Längsachsen der Probengefäßaufnahmen gebildeten Ebene, insbesondere also unterhalb des Verbindungsabschnitts, kein Leerraum vorgesehen ist. Der Verbindungsabschnitt kann mit dem Basisabschnitt direkt verbunden sein. In diesem Fall dient der Verbindungsabschnitt auch dem Erwärmen bzw. Temperieren der Probengefäßaufnahme mittels der Temperiereinrichtungen. Dies kann für mehrere oder viele Verbindungsabschnitte oder alle Verbindungsabschnitte eines Probengefäßabschnitts bzw. Thermoblocks gelten. Diese Anordnung hat den Effekt, dass die Wärme aus den heißeren Zwischenräumen zu den Probengefäßaufnahmen geführt wird und die Homogenität somit gesteigert werden kann. Strukturparameter sind hier die Dicke des Verbindungsabschnitts, dessen Masse und/oder dessen Oberfläche, und die allgemeine Form der Anbindung, z.B. abgerundet mit variablen Durchmessern, dreieckig mit variablen Winkeln.

Die Wandabschnitte, insbesondere ein unterer Wandteilabschnitt und/oder ein oberer Wandteilabschnitt der Probengefäßaufnahmen können unterschiedliche Dicken aufweisen. Es kann eine individuelle Aufdickung der Wandstärken der Probengefäßaufnahmen vorgesehen sein: Die individuelle Variation der Wandstärke hat bei einer richtigen Wahl positive Auswirkungen auf die Homogenität und die Schnelligkeit des Thermoblocks. Die individuellen Dicken der Wandabschnitte, die Masse und/oder die Oberfläche der Probengefäßaufnahmen sind optimierbare Strukturparameter des Thermoblocks.

Ein benachbarte Probengefäßaufnahmen verbindender Verbindungsabschnitt kann stegförmig, insbesondere plattenförmig sein. Die Platte ist durch eine Dicke, Außenkontur und eine Hauptebene gekennzeichnet, die horizontal, also parallel der x-y-Ebene verlaufen kann, oder die vertikal zur x-y-Ebene und parallel zur z-Achse verlaufen kann. Dicke und Außenkontur sind optimierbare Strukturparameter des Thermoblocks.

Der Verbindungsabschnitt kann eine oder mehrere Aussparungen und/oder Öffnungen und/oder Vorsprünge aufweisen, oder kann gitterförmig und/oder porös sein. Auf diese Weise lassen sich die wärmeleitenden Eigenschaften des Verbindungsabschnitts beeinflussen.

Die Nutzung eines oder mehrerer Fußabschnitte für Probengefäßaufnahmen und/oder die Nutzung von Verbindungsabschnitten zwischen benachbarten Probengefäßaufnahmen sowie die Variation der die Struktur definierenden Strukturparameter des Thermoblocks verwirklichen folgende erfinderische Idee: es wird mittels des additiven Herstellungsverfahrens lediglich dort Material aufgebaut, wo es einen positiven Einfluss auf die Wärmeleitung zwischen der Temperiereinrichtung und der Probe hat. Zusätzliche Strukturen, um die mechanische Robustheit und Stabilität zu gewährleisten und Strukturen die der Abdichtung zwischen dem Thermoblock, der Temperiereinrichtung(en) und der Umgebung dienen, können hier Ausnahmen darstellen.

Eine Probengefäßaufnahme weist ein Innenvolumen auf, das sich insbesondere ausgehend von einer Innenseite der Bodenwand der Probengefäßaufnahme entlang der Längsachse A über eine Strecke bis zu deren Öffnung erstreckt. Diese Strecke wird als Tiefe der Probengefäßaufnahme bezeichnet. Vorzugsweise liegen die Öffnungen der Probengefäßaufnahmen eines Thermoblocks in einer gemeinsamen Ebene, und vorzugsweise weisen mehrere oder alle Probengefäßaufnahmen jeweils gleiche Tiefen auf. Es ist aber auch möglich und bevorzugt, dass die Tiefe einer oder mehrerer Probengefäßaufnahmen, insbesondere von randständigen Probengefäßaufnahmen, größer ist als die der von nicht-randständigen Probengefäßaufnahmen. Die Innenvolumina der Probengefäßaufnahmen mit größerer Tiefe können sich insbesondere tiefer und insbesondere sogar in den Basisabschnitt hinein erstrecken. Dadurch kann im Randbereich die Wärmeübertragung verbessert werden und die Homogenität gesteigert werden. Die Tiefen von Probengefäßaufnahmen sind optimierbare Strukturparameter des Thermoblocks.

Es ist möglich und bevorzugt, dass ein Basisabschnitt bzw. eine Grundplatte Bereiche unterschiedlicher Dicke aufweist. Durch gezieltes Platzieren von zusätzlichem Material auf der Grundplatte können lokale Wärmekapazitäten eingestellt werden, um die Homogenität des Thermoblocks zu steigern. Analog kann durch lokale Aussparungen in dem Basisabschnitt bzw. in der Grundplatte die Wärmekapazität weiter gesenkt werden. Dies kann die Schnelligkeit und die Homogenität verbessern. Dicke und Außenkontur der Bereiche unterschiedlicher Dicke sind optimierbare Strukturparameter des Thermoblocks.

Der Thermoblock ist vorzugsweise mit einem Aufnahmerahmen und/oder einem Dichtrahmen versehen, der den Thermoblock insbesondere parallel zur Grundplatte bzw. Zur x-y-Ebene umläuft. Durch die Designfreiheit des additiven Herstellungsverfahrens kann auch der Dichtrahmen/ der Aufnahmerahmen mit der Grundplatte kombiniert werden und die Wärmekapazität weiter gesenkt werden.

Die Temperiereinrichtungen werden vorzugsweise zwischen dem Thermoblock und einem Kühlkörper angeordnet und durch Befestigungsmittel, insbesondere Schrauben, werden diese Komponenten gegeneinander gepresst. Durch das additive Fertigungsverfahren lassen sich zudem unkompliziert Stützstrukturen integrieren, insbesondere Gitterstrukturen, die oberhalb des Basisabschnitts bzw. der Grundplatte angeordnet werden, und die sich insbesondere zwischen dem Basisabschnitt und der Ebene der Öffnungen der Probengefäßaufnahmen erstrecken können. und die die Verbindungskräfte aufnehmen, wenn die genannten Komponenten befestigt werden.

Durch das additive Fertigungsverfahren lassen sich komplexe Strukturen des Thermoblocks realisieren. Vorzugsweise weist der Thermoblock mindestens eine oder mehrere Grundplatten mit einer planaren unteren Seite auf, und mindestens einem oder mehreren Probengefäßabschnitt auf. Der Probengefäßabschnitt kann zwischen den Probengefäßaufnahmen eine oder mehrere Aussparungen und/oder Öffnungen und/oder Vorsprünge aufweisen, oder kann porös sein. Eine oder mehrere oder jede Probengefäßaufnahme kann eine oder mehrere Aussparungen und/oder Öffnungen und/oder Vorsprünge aufweisen, oder kann porös sein. Auf diese Weise lassen sich die wärmeleitenden Eigenschaften des Verbindungsabschnitts beeinflussen.

Vorzugsweise ist der Thermoblock dadurch gekennzeichnet, dass er mittels eines additiven Fertigungsverfahrens hergestellt wurde, indem ein Basisabschnitt und mindestens eine Probengefäßaufnahme mittels eines additiven Fertigungsverfahrens hergestellt wurden, vorzugsweise integral hergestellt wurden.

Durch das additive Herstellungsverfahren ist es möglich, den -in der Regel als Datenmodell virtuell existierenden- Thermoblock aus einer gewünschten Richtung zu fertigen, ohne dass man die additive Fertigung zwingend vom unteren Ende des Thermoblocks beginnen muss. Indem man das virtuelle Modell dreht, und aus der gedrehten Position die horizontalen Fertigungsschichten einer additiven Fertigung definiert, ist es grundsätzlich möglich, den Thermoblock nicht von seiner unteren Seite in Richtung seiner oberen Seite zu fertigen, sondern aus einer anderen Richtung zu fertigen. Beispielsweise kann der Thermoblock von seiner oberen Seite in Richtung seiner unteren Seite gefertigt werden, oder von einer linken Seite in Richtung seiner rechten Seite, oder von einer vorderen Seite in Richtung seiner hinteren Seite. Die Wahl der Richtung der Fertigung wird davon abhängen, dass die Fertigung effizient durchgeführt werden kann, eventuell auch abhängig davon, dass die gewünschten Strukturen des Thermoblocks sich eventuell nur aus einer definierten Richtung fertigen lassen.

Vorzugsweise ist der Thermoblock dadurch gekennzeichnet, dass er mittels eines additiven Fertigungsverfahrens hergestellt wurde, indem zuerst ein Basisabschnitt des Thermoblocks mittels des additiven Fertigungsverfahrens gefertigt wurde, und nachfolgend die mindestens eine Probengefäßaufnahme mittels des additiven Fertigungsverfahrens gefertigt wurde, insbesondere ohne dass das additive Fertigungsverfahren zwischen der Fertigung des Basisabschnitts und der Fertigung -insbesondere der ersten Schicht- der mindestens einen Probengefäßaufnahme unterbrochen wurde.

Es ist aber auch möglich und bevorzugt, dass der Thermoblock mittels eines additiven Fertigungsverfahrens hergestellt wurde, indem zuerst die mindestens eine Probengefäßaufnahme mittels des additiven Fertigungsverfahrens gefertigt wurde, und nachfolgend ein Basisabschnitt des Thermoblocks mittels des additiven Fertigungsverfahrens gefertigt wurde, insbesondere ohne dass das additive Fertigungsverfahren zwischen der Fertigung der mindestens einen Probengefäßaufnahme und der Fertigung -insbesondere der ersten Schicht- des Basisabschnitts unterbrochen wurde.

Es ist bevorzugt, dass die mindestens eine Probengefäßaufnahme und/oder der Basisabschnitt in einem additiven Herstellungsverfahren, insbesondere ohne Unterbrechung dieses Herstellungsverfahrens, gefertigt wurde. Es ist aber auch möglich und bevorzugt, dass die mindestens eine Probengefäßaufnahme und/oder der Basisabschnitt separat gefertigt wird, durch ein additives Herstellungsverfahren oder ein anderes Herstellungsverfahren, z.B. durch ein Gußverfahren, ein spanendes Verfahren, oder ein galvanisches Verfahren.

Probengefäßaufnahmen können einzeln oder mehrere Probengefäßaufnahmen können in Gruppen gefertigt werden, oder alle Probengefäßaufnahmen können als integrale Bauteile gemeinsam gefertigt werden. Es ist dann bevorzugt dass die mindestens eine Probengefäßaufnahme nach ihrer Fertigung -einzeln, in Gruppen oder als Gesamtbauteil- mit dem Basisabschnitt verbunden werden. Vorzugsweise wird der Basisabschnitt durch additive Fertigung der mindestens einen Probengefäßaufnahme hinzugefügt. Dabei ist es möglich, dass das Material der mindestens einen Probengefäßaufnahme angeschmolzen wird, um nachfolgend die erste Materialschicht des Basisabschnitts hinzuzufügen, der dann sukzessive aufgebaut wird.

Das den Thermoblock enthaltende Laborgerät ist vorzugsweise ein (PCR-)Thermocylcer. Es ist aber auch möglich dass das den Thermoblock enthaltende Laborgerät ein Thermomischer ist. Thermoblock und/oder das den Thermoblock enthaltende Laborgerät können Teil eines Laborautomaten sein, insbesondere eines Laborpipettierautomaten zur Hochdurchsatzverarbeitung flüssiger Proben (Liquid-Handling-Automat).

Ein Thermocycler ist ein Gerät, das in der Lage ist, die Temperatur mindestens einer Probe zeitlich nacheinander auf eine vorbestimmte Temperatur einzustellen und für eine vorgegebene Dauer auf dieser Temperaturstufe zu halten. Der Ablauf dieser Temperatursteuerung ist zyklisch. Das heißt ein vorbestimmter Temperaturzyklus, also eine Abfolge von mindestens zwei Temperaturstufen, wird wiederholt durchgeführt. Dieses Verfahren dient insbesondere der Durchführung einer Polymerase-Kettenreaktion (PCR). In diesem Zusammenhang bezeichnet man einen Thermocycler auch manchmal als PCR-Block. Ein Thermocycler, insbesondere die Behandlungseinrichtung des Thermocyclers, weist vorzugsweise einen Thermoblock auf. Ein Thermoblock ist ein Probenhalter aus einem wärmeleitenden Material, meistens ein metallhaltiges Material oder ein Metall, insbesondere Aluminium oder Silber. Der Probenhalter weist eine Kontaktierseite auf, die durch mindestens eine Heiz-/Kühleinrichtung des Thermocyclers, insbesondere ein Peltierelement, kontaktiert wird. Der Thermocycler, insbesondere die Behandlungseinrichtung des Thermocyclers, weist eine Regeleinrichtung mit mindestens einem Regelkreis auf, dem als Stellglied die mindestens eine Heiz-/Kühleinrichtung und als Messglied mindestens eine Temperaturmesseinrichtung zugeordnet sind. Mittels der Regeleinrichtung wird die Temperatur einer Temperaturstufe geregelt. Ein Kühlkörper des Thermocyclers, insbesondere der Behandlungseinrichtung des Thermocyclers, dient zur Kühlung von Abschnitten des Thermocyclers, insbesondere der Kühlung der Peltierelemente. Der Thermocycler, insbesondere die Behandlungseinrichtung des Thermocyclers, kann weitere Heiz- und/oder Kühlelemente aufweisen. Vorzugsweise weist der Thermocycler, insbesondere die Behandlungseinrichtung des Thermocyclers, eine Zeitgebereinrichtung auf, mit der zeitliche Parameter der Einstellung des Temperaturzyklus steuerbar sind.

Ein Thermomischer, auch bezeichnet als "thermal mixing device", dient der Bewegung einer temperierten Laborprobe, insbesondere zum Mischen einer mehrere Bestandteile aufweisenden Laborprobe. Thermomischer, insbesondere deren Behandlungseinrichtung, können insbesondere zur Durchführung einer oszillierenden Bewegung eingerichtet sein. Thermomischer, insbesondere deren Behandlungseinrichtung, weisen insbesondere einen Antrieb zum Antreiben der Bewegung auf, weisen insbesondere eine Zeitgebereinrichtung auf, mit der zeitliche Parameter der Einstellung der Mischbehandlung steuerbar sind und weisen insbesondere mindestens eine Heiz-/Kühleinrichtung und mindestens eine Regeleinrichtung mit mindestens einem Regelkreis, dem als Stellglied die mindestens eine Heiz-/Kühleinrichtung und als Messglied mindestens eine Temperaturmesseinrichtung zugeordnet sind. Die gerätegesteuerte Behandlung der mindestens einen Laborprobe entspricht bei einem Thermomischer einer Mischbehandlung, der die mindestens eine Probe unterzogen wird.

Der Thermoblock weist vorzugsweise Aufnahmen für Temperatursensoren auf. Diese sind vorzugsweise oberhalb der Grundplatte des Thermoblocks angeordnet, so dass im Betrieb des Thermoblocks die am Sensor einwirkende Temperatur eher der Temperatur innerhalb der Probe entspricht. Bei herkömmlich gefertigten Thermoblöcken sind die Temperatursensoren meist im direkten thermischen Kontakt mit der Grundplatte bzw. unmittelbar auf der Grundplatte angeordnet; dadurch wird die Zieltemperatur am Sensor meist deutlich früher erreicht als in der Probe, so dass die Verzögerung beim Zyklieren eventuell berücksichtigt werden muss.

Der Test der Homogenität eines Thermoblocks kann auf verschiedene Weise ermittelt werden. Eine Möglichkeit besteht darin, geeichte Temperatursensoren an verschieden positionierten Probengefäßaufnahmen des Thermoblocks anzubringen und im Betrieb des Thermoblocks die Homogenität beispielsweise als Standardabweichung des Mittelwerts der Temperatur am Thermoblock zu ermitteln. Eine weitere Möglichkeit besteht darin, in verschieden positionierten Probengefäßaufnahmen des Thermoblocks dieselbe PCR-Reaktion stattfinden zu lassen und die die Ausbeute des vervielfältigten Produkts in jedem Probengefäß zu bestimmen. Eine weitere Möglichkeit besteht darin, die Homogenität aus einem Simulationsverfahren zu ermitteln, bei dem die Temperaturverteilung des erfindungsgemäß gefertigten Thermoblocks anhand eines Daten-Modells des erfindungsgemäß gefertigten Thermoblocks berechnet wird. Ein geeignetes Verfahren zur Bestimmung der Homogenität der Temperaturverteilung eines Thermoblocks ist in der Eppendorf APPLICATION NOTE No. 244 vom Dezember 2011 beschrieben, erhältlich via www.eppendorf.de.

Die Geschwindigkeit des Temperierens eines Thermoblocks kann ermittelt werden, indem ermittelt wird, wie lange bei konstanter bekannter Heizleistung ein gewünschter Temperaturanstieg im Thermoblock dauert oder wie die Temperaturdifferenz ausfällt, wenn ein Thermoblock bei konstanter bekannter Heizleistung für eine vorbestimmte Dauer geheizt wird. Ein geeignetes Verfahren zur Bestimmung der Geschwindigkeit des Temperierens eines Thermoblocks ist in der Eppendorf APPLICATION NOTE No. 274 beschrieben, erhältlich via www.eppendorf.de.

Die additive Fertigung des Thermoblocks geht von einem granularen Material aus, das vorzugsweise Metall enthält, vorzugsweise Aluminium enthält, oder Silber oder Titan. Auch keramische Materialen sind möglich. Nicht-metallische bzw. andere Materialien sind möglich, z.B. enthaltend -oder bestehend aus- Siliziumcarbid oder Kohlenstoff bzw. Graphit.

Die Erfindung betrifft auch das Verfahren zur Herstellung eines Thermoblocks, welcher der Aufnahme und Temperierung von Laborprobengefäßen in einem Labortemperiergerät, insbesondere in einem PCR-Thermocycler, dient, aufweisend den Schritt: * Herstellen des Thermoblocks mittels eines additiven Fertigungsverfahrens, vorzugsweise auf Basis eines metallhaltigen Granulats.

Die Erfindung betrifft auch das Verfahren (nachfolgend auch als "Simulationsverfahren" bezeichnet) zur Berechnung der Formstruktur eines Thermoblocks, welcher der Aufnahme und Temperierung von Laborprobengefäßen in einem Labortemperiergerät, insbesondere in einem PCR-Thermocycler, dient und welcher durch ein computergesteuertes, von mindestens einem Strukturparameter abhängiges, additives Fertigungsverfahren herstellbar ist, wobei die Formstruktur des Thermoblocks durch den mindestens einen Strukturparameter definierbar ist, aufweisend den Schritt:
* Variieren mindestens eines Strukturparameters;
* Durchführen eines Simulationsverfahrens zur Simulation des Wärmestroms durch mindestens einen Abschnitt des Thermoblocks in Abhängigkeit von dem mindestens einen Strukturparameter;
* Auswahl mindestens eines, den zu fertigenden Thermoblock definierenden, Strukturparameters in Abhängigkeit von dem Simulationsverfahren, und insbesondere Bereitstellen dieses mindestens einen Strukturparameters zur für die nachfolgende additiven Fertigung des so strukturell bestimmten Thermoblocks.

Geeignete Strukturparameter zur Durchführung des Simulationsverfahrens sind in der vorliegenden Beschreibung der Erfindung enthalten oder unmittelbar aus der Beschreibung bevorzugter, struktureller Gestaltungen des Thermoblocks ableitbar. Das Simulationsverfahren kann mittels kommerziell erhältlicher Software durchgeführt werden, z.B. einer Finite-Elemente-Software. Geeignet ist insbesondere ANSYS der Firma Ansys Inc., Pennsylvania, USA.

In einer bevorzugten Ausführungsform ist der Thermoblock gekennzeichnet dadurch, dass er gemäß folgendem Herstellungsverfahren gefertigt wurde; dieselben Schritte kennzeichnen auch eine bevorzugte Ausführungsform des erfindungsgemäßen Verfahrens zur Herstellung des Thermoblocks:
- Fertigung eines Basisabschnitts bzw. einer Grundplatte, vorzugsweise mittels des additiven Herstellungsverfahrens oder eines anderen Herstellungsverfahrens;
- Additive Fertigung der mindestens einen Probengefäßaufnahme oberhalb des Basisabschnitts bzw. der Grundplatte, insbesondere unter -insbesondere lokalem- Schmelzen der obersten Schicht des Basisabschnitts bzw. der Grundplatte, um den additiv zu verarbeitenden granularen Werkstoff integral mit dem Basisabschnitts bzw. der Grundplatte zu verbinden, wobei die oberste Schicht des Basisabschnitts bzw. der Grundplatte vorzugsweise dasselbe Material aufweisen oder aus diesem bestehen.
- Optionale Schritte: * vor dem Schritt der additiven Fertigung: Bilden eines Stapelverbunds durch Verbinden der zur Verwendung mit dem zu fertigenden Thermoblock vorgesehenen Temperiereinrichtungen, insbesondere Peltierelemente, mit dem Basisabschnitt bzw. der Grundplatte und vorzugsweise auch mit einem Kühlkörper; * dann: Messen der Homogenität der Temperaturverteilung auf dem Basisabschnitt bzw. der Grundplatte, wobei diese Homogenität ein Resultat ist der individuellen Ausgestaltung der Temperiereinrichtungen, insbesondere Peltierelemente, insbesondere der Homogenität der Wärmetransportleistung der Temperiereinrichtungen über deren Fläche, insbesondere ein Resultat ist der individuellen Ausgestaltung und/oder Anbindung des Kühlköpers an die Temperiereinrichtung(en), insbesondere ein Resultat ist der individuellen thermischen Kopplung der Temperiereinrichtungen mit dem Basisabschnitt bzw. der Grundplatte, insbesondere mittels Wärmeleitmedium wie z.B. einem insbesondere graphithaltigen Wärmeleitpad, insbesondere ein Resultat ist der elektronischen Regelung und/oder Spannungsversorgung der Temperiereinrichtungen mittels einer Steuereinrichtung, insbesondere ein Resultat ist aus der räumlichen Anordnung der mit dem Basisabschnitt bzw. der Grundplatte verbundenen Temperiereinrichtungen relativ zu dem/den Bestandteil(en) eines Laborgerätes, insbesondere Thermocyclers, wenn der Thermoblock (bzw. Basisabschnitt und Temperiereinrichtungen) bestimmungsgemäß in dem Laborgerät angeordnet ist, wobei diese Bestandteile insbesondere ein Rahmen sein kann, in den der Basisabschnitt eingefasst wird.

Es ist möglich und bevorzugt, dass der Thermoblock weiter bearbeitet wurde bzw. im Rahmen des Herstellungsverfahren weiter bearbeitet, nachdem er mittels des additiven Herstellungsverfahrens erzeugt wurde. Mögliche und bevorzugte Schritte einer Nachbearbeitung sind insbesondere, unabhängig voneinander oder kombiniert:
* Erhitzen des mittels des additiven Herstellungsverfahrens erzeugten Thermoblocks, insbesondere auf eine Schmelztemperatur seines Materials; oder Kühlen;
* Beschichten, insbesondere durch Tauchbad oder Besprühen, des mittels des additiven Herstellungsverfahrens erzeugten Thermoblocks;
* spanende Oberflächenbearbeitung, insbesondere Fräsen, Polieren, des mittels des additiven Herstellungsverfahrens erzeugten Thermoblocks;

Durch solche Nachbearbeitungsschritte werden insbesondere folgende Oberflächen geglättet, die durch das additive Fertigungsverfahren eine erkennbare Oberflächenporösität bzw. Rauheit aufweisen: die Unterseite des Basisabschnitt bzw. der Grundplatte, um die thermische Kontaktierung mit den Temperiereinrichtungen, insbesondere Peltierelementen, zu verbessern; die Innenseite der Probengefäßaufnahmen, um die thermische Kontaktierung mit den Probengefäßen, insbesondere deren Außenseiten, zu verbessern.

Der erfindungsgemäße Thermoblock ist insbesondere durch Merkmale seiner Herstellung charakterisierbar. Insofern im Rahmen dieser Erfindung das erfindungsgemäße Verfahren zur Herstellung des Thermoblocks durch einen oder mehrere Schritte beschrieben wird, lassen sich diese Schritte auch ohne weiteres als Merkmale verstehen, die den Thermoblock strukturell beschreiben, insofern diese Schritte den Thermoblock strukturell prägen. Die additive Fertigung des Thermoblocks oder eines seiner Bestandteile prägt den Thermoblock, da dieser durch diese besondere Art der Fertigung eine Porosität seiner Oberfläche und/oder seines Volumens erhält.

Das erfindungsgemäße Verfahren zur Herstellung des Thermoblocks wird im Rahmen dieser Beschreibung insbesondere durch Schritte dieses Verfahrens beschrieben. Insofern der Thermoblock im Rahmen dieser Beschreibung durch strukturelle Merkmale beschrieben wird, beispielsweise durch zwischen benachbarten Probengefäßaufnahmen vorgesehene, oberhalb des Basisabschnitts gelegene Stützstrukturen gekennzeichnet ist, lassen sich daraus auch unmittelbar Schritte des erfindungsgemäßen Verfahrens zur Herstellung des Thermoblocks ableiten, beispielsweise dass das Verfahren zur Herstellung des Thermoblocks den Schritt aufweist, zusammen mit den Probengefäßaufnahmen auch die genannten Stützstrukturen additiv zu fertigen.

Weitere bevorzugte Ausgestaltungen des erfindungsgemäßen Thermoblocks und des erfindungsgemäßen Verfahrens seiner Herstellung ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:
Fig. 1 zeigt schematisch ein Ausführungsbeispiel eines erfindungsgemäßen Verfahrens zur Herstellung eines erfindungsgemäßen Thermoblocks gemäß einem ersten Ausführungsbeispiel.
Fig. 2a zeigt die zeichnerische, kameraperspektivische Wiedergabe eines erfindungsgemäßen Thermoblocks gemäß dem ersten Ausführungsbeispiel.
Fig. 2b zeigt die zeichnerische, kameraperspektivische Wiedergabe eines erfindungsgemäßen Thermoblocks gemäß einem zweiten Ausführungsbeispiel.
Fig. 3a zeigt den Thermoblock gemäß Fig. 2b, der in einem Rahmen eines Thermocyclers angeordnet ist.
Fig. 3b zeigt perspektivisch einen Thermocycler mit dem in dem Rahmen angeordneten Thermoblock der Fig. 2b, einmal von schräg vorne und einmal von schräg hinten.
Fig. 4a zeigt perspektivisch den Ausschnitt eines erfindungsgemäßen Thermoblocks gemäß dem zweiten Ausführungsbeispiel.
Fig. 4b zeigt perspektivisch den Ausschnitt eines erfindungsgemäßen Thermoblocks gemäß einem dritten Ausführungsbeispiel.
Fig. 4c zeigt in einer Frontansicht den Ausschnitt eines erfindungsgemäßen Thermoblocks gemäß einem vierten Ausführungsbeispiel.
Fig. 4d zeigt in einer Frontansicht den Ausschnitt eines erfindungsgemäßen Thermoblocks gemäß einem fünften Ausführungsbeispiel.
Fig. 5a zeigt perspektivisch den Ausschnitt eines erfindungsgemäßen Thermoblocks gemäß einem sechsten Ausführungsbeispiel.
Fig. 5b zeigt perspektivisch den Ausschnitt eines erfindungsgemäßen Thermoblocks gemäß einem siebten Ausführungsbeispiel.
Fig. 6a zeigt in einer seitlichen Querschnittsansicht den Ausschnitt eines erfindungsgemäßen Thermoblocks gemäß einem achten Ausführungsbeispiel.
Fig. 6b zeigt in einer seitlichen Querschnittsansicht den Ausschnitt eines erfindungsgemäßen Thermoblocks gemäß einem neunten Ausführungsbeispiel.
Fig. 7a zeigt in einer seitlichen Querschnittsansicht den Ausschnitt eines erfindungsgemäßen Thermoblocks gemäß dem zweiten Ausführungsbeispiel.
Fig. 7b zeigt in einer seitlichen Querschnittsansicht den Ausschnitt eines erfindungsgemäßen Thermoblocks gemäß dem dritten Ausführungsbeispiel.
Fig. 8a zeigt perspektivisch den Ausschnitt eines erfindungsgemäßen Thermoblocks gemäß einem zehnten Ausführungsbeispiel, wobei dieser Ausschnitt als Modell zur Durchführung eines beispielhaften Verfahrens zur Simulation bzw. Berechnung der Formstruktur eines erfindungsgemäßen Thermoblocks dient.
Fig. 8b zeigt ein berechnetes Wärmebild, das in einer seitlichen Querschnittsansicht den Ausschnitt des Thermoblocks gemäß Fig. 8a und die daran vorliegende Wärmeverteilung zeigt, die sich in einem beispielhaften erfindungsgemäßen Verfahren zur Simulation bzw. Berechnung der Formstruktur des Thermoblocks ergibt.
Fig. 9a zeigt ein berechnetes Wärmebild, das in einer seitlichen Querschnittsansicht den Ausschnitt eines erfindungsgemäßen Thermoblocks gemäß einem elften Ausführungsbeispiel und die daran vorliegende Wärmeverteilung zeigt, die sich in einem beispielhaften erfindungsgemäßen Verfahren zur Simulation bzw. Berechnung der Formstruktur des Thermoblocks ergibt.
Fig. 9b zeigt ein berechnetes Wärmebild, das in einer seitlichen Querschnittsansicht den Ausschnitt eines erfindungsgemäßen Thermoblocks gemäß einem zwölften Ausführungsbeispiel und die daran vorliegende Wärmeverteilung zeigt, die sich in einem beispielhaften erfindungsgemäßen Verfahren zur Simulation bzw. Berechnung der Formstruktur des Thermoblocks ergibt.
Fig. 10a zeigt schematisch das Verfahren zur Herstellung eines Thermoblocks, gemäß einem Ausführungsbeispiel.
Fig. 10b zeigt schematisch das Verfahren zur Berechnung der Formstruktur eines Thermoblocks, gemäß einem Ausführungsbeispiel.

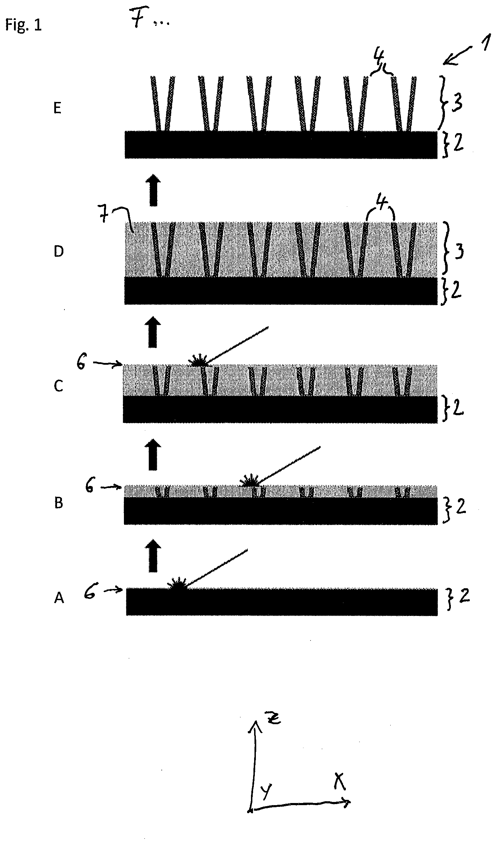

Fig. 1 zeigt schematisch ein Ausführungsbeispiel eines erfindungsgemäßen Verfahrens 100 zur Herstellung eines erfindungsgemäßen Thermoblocks 1. Bei diesem Verfahren selektives Laserschmelzen (englisch: Selective Laser Melting, SLM) als additives Fertigungsverfahren zur Herstellung des Thermoblocks eingesetzt. Dabei wird ein Laserstrahl 5 zum lokalen Schmelzen von pulverförmigem Material 6, hier zum Beispiel ein Aluminiumgranulat, insbesondere EOS Aluminium AISi10Mg, verwendet. Es kann hierbei das Gerät EOS M 290 verwendet werden, erhältlich jeweils über EOS GmbH, Electro Optical Systems, 82152 Krailling, Deutschland. Dabei wird der Laser computergesteuert auf zuvor durch ein 3D-Modell definierte Punkte einer pulvergefüllten Ebene 6 gerichtet.

Der Prozess beginnt (nicht gezeigt) mit dem Aufteilen von 3D-CAD-Dateidaten in ein Schichtmodell, dessen Schichten beispielsweise zwischen 10 und 100 Mikrometer dick sind, wobei ein 2D-Bild jeder Schicht erstellt wird. Dieses Dateiformat ist die branchenübliche STL-Datei, die für die meisten schichtbasierten 3D-Druck oder Stereolithografietechnologien verwendet wird. Diese Datei wird dann von einem Softwarepaket zur Dateivorbereitung geladen, das Parameter, Werte und gegebenenfalls Stützstrukturen als Maschinendaten zuweist. Diese Maschinendaten werden von einer SLM-Maschine interpretiert, um das Produkt, den Thermoblock, zu erstellen.

Beim dem hier beispielhaft beschriebenen Verfahren 100 werden dünne Schichten von zerstäubtem feinem Metallpulver unter Verwendung eines Beschichtungsmechanismus gleichmäßig auf einer Substratplatte (nicht gezeigt) als pulvergefüllte Schicht 6, üblicherweise Metall, verteilt, die sich in der vertikalen (Z) Achse bewegt. Dies geschieht vorzugsweise in einer Kammer (nicht gezeigt), die insbesondere eine streng kontrollierte Inertgasatmosphäre enthält. Der Laser und/oder die Substratplatte werden in der x-y-Ebene Lateral bewegt, um die in dieser Ebene zu bildenden Abschnitte des Thermoblocks zu erzeugen. Der Thermoblock wird schichtweise erstellt. Jede 2D-Scheibe der Teilegeometrie wird durch selektives Schmelzen des Pulvers innerhalb der jeweiligen Schicht und mit der darunter liegenden Schicht mittels eines kontinuierlichen oder gepulsten Hochleistungslaserstrahl verschmolzen. Die Laserenergie ist intensiv genug, um ein vorzugsweise vollständiges Schmelzen (Schweißen) der Partikel zu ermöglichen, um festes Metall zu bilden. Der Vorgang wird Schicht für Schicht wiederholt, bis das Teil fertig ist. Im Bereich der Kammer befinden sich eine Materialausgabeplattform (nicht gezeigt), eine Bauplattform (nicht gezeigt) sowie eine Überstreichklinge (nicht gezeigt), mit der neues Pulver über die Bauplattform bewegt wird.

Wie in Fig. 1 gezeigt ist, wird im Schritt zunächst A ein Basisabschnitt 2 bearbeitet, insbesondere additiv gefertigt. Der Basisabschnitt 2 ist hier eine quaderförmige, planare Grundplatte 2. Der Basisabschnitt könnte auch als vorgefertigtes Bauteil bereitgestellt werden, z.B. als gegossenes und/oder gefrästes Bauteil. In den Schritten B und C wird sukzessive und schichtweise der Probengefäßabschnitt 3 mit den nebeneinander freistehend angeordneten Probengefäßaufnahmen 4 additiv gefertigt. Alle Probengefäßaufnahmen 4 sind im ersten Ausführungsbeispiel des Thermoblocks 1 im Prinzip identisch geformt. Dabei lässt sich bei den Probengefäßaufnahmen bzw. der Grundplatte der in den Ausführungsbeispielen gezeigten Thermoblöcke bei visueller Inspektion feststellen, dass eine Oberflächenkörnung bzw. Rauhigkeit vorliegt, die auf das additive Herstellungsverfahren zurückzuführen ist. Im Schritt D ist der Thermoblock 1 bereits gefertigt, aber das pulverförmige Restmaterial 7 ist noch im quaderförmigen Bereich des Probengefäßabschnitts 3 zwischen den -und in den-Probengefäßaufnahmen 4 angeordnet. Im Schritt E wurde das Restmaterial 7 entfernt, und der additiv gefertigte Thermoblock 1 liegt separat vor.

In weiteren Schritten F kann der Thermoblock 1 noch nachbearbeitet werden. Vorzugsweise wird die Unterseite der Grundplatte geglättet, z.B. durch Fräsen, ebenso werden vorzugsweise die Innenseiten der hohlkonusförmigen Abschnitte der Probengefäßaufnahmen 4 geglättet.

Die zur Herstellung der in den Ausführungsbeispielen gezeigten, aus einer Aluminiumlegierung bestehenden Thermoblöcke verwendete kommerzielle SLM-Maschine war die genannte EOS M 290, das pulverförmige Ausgangsmaterial war EOS Aluminium AISi10Mg.

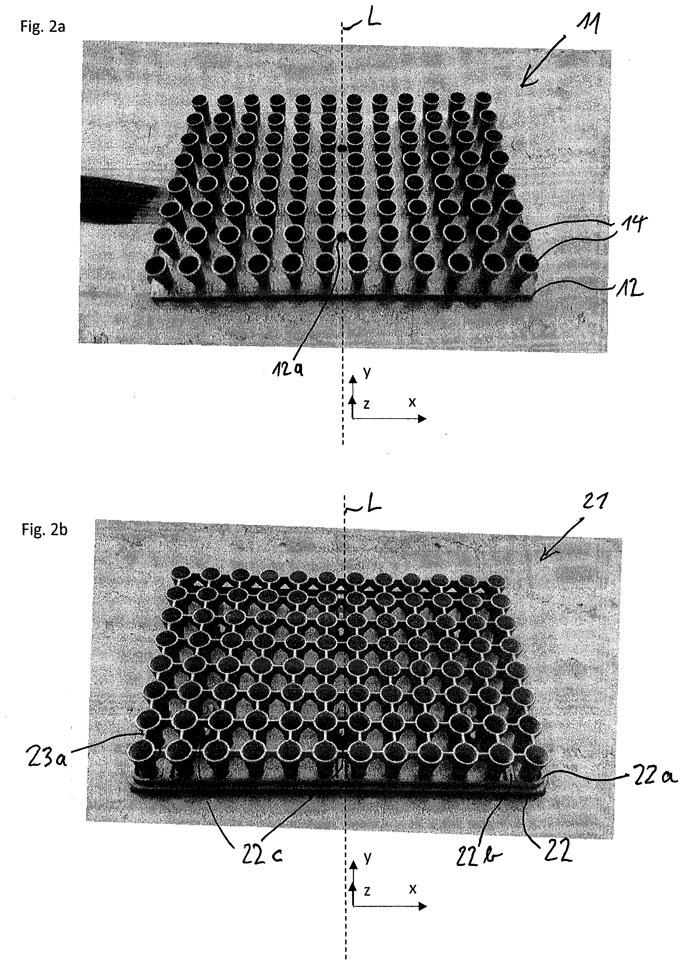

Fig. 2a ist die Wiedergabe einer Fotografie eines additiv gefertigten Thermoblocks 11, der im Prinzip der Form des Thermoblocks 1 entspricht. Der Thermoblock 11 weist die planare quaderförmige, additive gefertigte Grundplatte 12 auf, die während dem additiven Verfahren schichtweise erhöht wurde, um die integral mit der Grundplatte 12 verbundenen Probengefäßaufnahmen 14 zu erhalten. Die Grundplatte 12 weist zwölf Löcher 12a auf, die sich senkrecht zur Hauptebene der Grundplatte 12 durch diese erstrecken. Diese Löcher dienen der Aufnahme von Befestigungsschrauben. Die Löcher 12a können durch additive Fertigung erzeugt worden sein, oder durch eine Nachbearbeitung des additiv gefertigten Thermoblocks mittels Bohrung.

Die Probengefäßaufnahmen 14 sind jeweils identisch geformt. Sie weisen Becherform auf. Der Boden des Bechers wird jeweils von der Grundplatte 12 gebildet. Die Becherwand ist hohlkonusförmig. Der Hohlkonus öffnet und erweitert sich nach oben (Richtung der positiven z-Achse). Der Hohlkonus ist zu einer Achse A rotationssymmetrisch geformt, die senkrecht auf der Hauptebene der Grundplatte 12 steht. Die Achse A verläuft längs des Hohlkonus durch dessen Symmetriezentrum. Die Öffnungen aller Probengefäßaufnahmen 14 sind alle jeweils in derselben Ebene angeordnet. Dies ist die Standardanordnung, um standard-konforme Mikrotiterplatten bzw. PCR-Platten aufnehmen zu können. Es sei auf die zuvor genannten SBS-Standards verwiesen. Die Höhen der Probengefäßaufnahmen könnten aber prinzipiell unterschiedlich sein, insbesondere könnten die Öffnungen von zwei, mehreren, oder allen Probengefäßaufnahmen 14 in unterschiedlichen Höhen liegen.

Der Thermoblock 11 weist insgesamt 96 Probengefäßaufnahmen auf, die in einem regelmäßigen rechteckförmigen Gitter nebeneinander angeordnet sind. Die Gitterzelle dieses Gitters ist jeweils quadratisch. Die Gitteranordnung entspricht der Gitteranordnung einer 96-er Mikrotiterplatte gemäß SBS-Standard ANSI SLAS 1-2004 (R2012) (siehe dort Abschnitt 4.1 und Fig. 1, mit 8 Reihen und 12 Spalten.

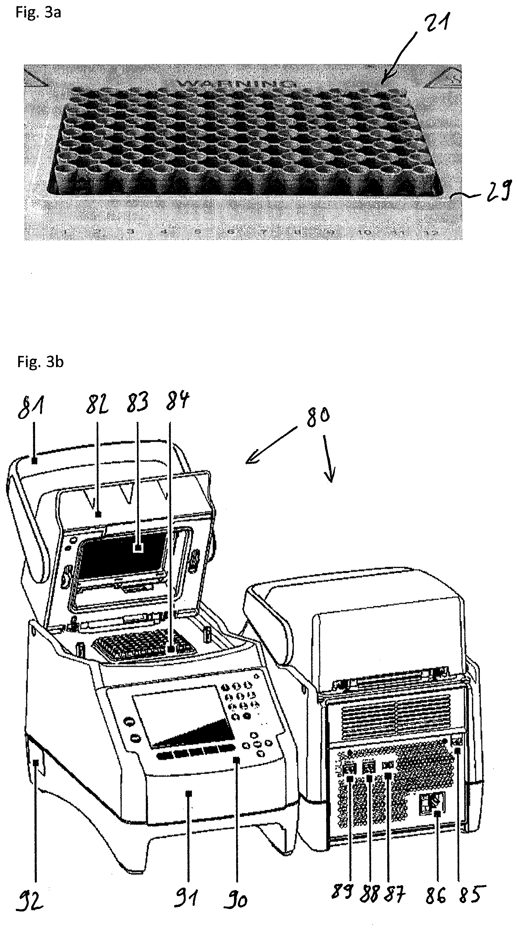

In den Figuren 2a und 2b ist jeweils eine Linie L gezeigt, mit Bezug zu der ein kartesisches Koordinatensystem gezeigt ist, dessen z-Achse an der Position der Linie L parallel zu dieser verläuft. Durch den fotographischen Ursprung der Abbildungen in Fig. 2a, 2b (auch Fig. 3a), verlaufen die Achsen A der Probengefäßaufnahmen scheinbar nicht parallel zu einander, in Realität ist dies aber der Fall. Die Darstellung der Fig. 2a, 2b, 3aist nicht isometrisch.

Fig. 2b ist die Wiedergabe einer Fotografie eines additiv gefertigten Thermoblocks 21. Der Thermoblock 21 weist die planare quaderförmige, additive gefertigte Grundplatte 22 auf, die während dem additiven Verfahren schichtweise erhöht wurde, um die integral mit der Grundplatte 22 verbundenen Probengefäßaufnahmen 24 zu erhalten. Die Hauptebenen der Grundplatte 22 verlaufen in der Abbildung parallel zur x-y-Ebene.

Der Thermoblock 21 weist im Vergleich zum Thermoblock 11 Zusatzstrukturen 22a, 22b, 22c, 23a auf, die in demselben Herstellungsprozess des Thermoblocks 21 additiv gefertigt wurden. Die Grundplatte 22 weist Zusatzstrukturen 22a, 22b, 22c auf: die Grundplatte weist einen sich nach oben erstreckenden, um alle Probengefäßaufnahmen umlaufenden Steg 22a auf. Dieser bildet mit der Oberseite der Grundplatte 22 eine Wanne, in der alle Probengefäßaufnahmen 24 platziert sind. Zudem weist die Oberseite der Grundplatte 22 Verstärkungsstrukturen 22b, 22c auf, die zur Befestigung des Thermoblocks 21 in der Montageposition am Thermocycler (siehe Fig. 3b) dienen und die die Kräfte der Befestigung aufnehmen und auf der Grundplatte verteilen, wenn diese an einem Substrat, z.B. dem Kühlkörper der unter der Basisplatte anzuordnenden Peltierelemente (nicht gezeigt) verschraubt und/oder festgeklemmt wird. Die nach oben aus der Grundplatte hervorstehenden Verstärkungsformen sind (in der x-y-Ebene betrachtet) kreuzförmig ausgebildet und weisen in ihrem Zentrum Löcher auf, die sich senkrecht zur Hauptebene der Grundplatte 22 durch diese erstrecken. Diese Löcher dienen der Aufnahme von Befestigungsschrauben. Die Löcher können durch additive Fertigung erzeugt worden sein, oder durch eine Nachbearbeitung des additiv gefertigten Thermoblocks mittels Bohrung.

Eine, mehrere oder alle der genannten Zusatzstrukturen können grundsätzlich bei jedem erfindungsgemäßen Thermoblock vorgesehen sein.

Die Probengefäßaufnahmen 24 sind jeweils identisch geformt. Die Form entspricht den Probengefäßaufnahmen 14 der Fig. 2a. Im Unterschied zum Thermoblock 11 weist der Thermoblock 21 eine Verstärkungsstruktur 23a auf, die vorliegend vollständig oberhalb der Grundplatte und vorliegend ohne diese direkt zu kontaktieren additiv bzw. integral mit dem Probengefäßabschnitt (23) und insbesondere auch integral mit der Grundplatte 22 gefertigt ist.

Die Verstärkungsstruktur 23a weist insgesamt 172 Verbindungsstege auf, über die jede Probengefäßaufnahme 14 mit mindestens einer benachbarten Probengefäßaufnahme 14 integral verbunden ist. Von diesen 172 Verbindungsstegen verlaufen 8^{∗}11=88 jeweils parallel der x-Achse bzw. der ersten Längsseite der Grundplatte, und von diesen 172 Verbindungsstegen verlaufen 7^{∗}12=84 jeweils parallel der y-Achse bzw. der zweiten Längsseite der Grundplatte. Die insgesamt 2^{∗}8+2^{∗}10=36 randständigen Probengefäßaufnahmen der Gitteranordnung sind über jeweils zwei Verbindungsstege mit benachbarten Probengefäßaufnahmen integral verbunden, die 6^{∗}10=60 innenliegenden Probengefäßaufnahmen der Gitteranordnung sind über jeweils vier Verbindungsstege mit benachbarten Probengefäßaufnahmen integral verbunden.

Ausgehend von einem Thermoblock mit insgesamt n^{∗}m Probengefäßaufnahmen, die in einem rechteckigen Gitter aus n Zeilen und m Spalten angeordnet sind, lässt sich die bevorzugte Anordnung der Verbindungsstege der Verstärkungsstruktur 23a des Ausführungsbeispiels abstrahieren wie folgt: Die Verstärkungsstruktur weist insgesamt n^{∗}(m-1)+ (n-1)^{∗}m Verbindungsstege auf, über die jede Probengefäßaufnahme mit mindestens einer benachbarten Probengefäßaufnahme integral verbunden ist. Von diesen n^{∗}(m-1)+ (n-1)^{∗}m Verbindungsstegen verlaufen Verbindungsstege der Anzahl n^{∗}(m-1) jeweils parallel der x-Achse bzw. der ersten Längsseite der Grundplatte, und von diesen 172 Verbindungsstegen verlaufen Verbindungsstege der Anzahl (n-1)^{∗}m jeweils parallel der y-Achse bzw. der zweiten Längsseite der Grundplatte. Die insgesamt 2^{∗}n+2^{∗}(m-1) randständigen Probengefäßaufnahmen der Gitteranordnung sind über jeweils zwei Verbindungsstege mit benachbarten Probengefäßaufnahmen integral verbunden, die (n-2)^{∗}(m-2) innenliegenden Probengefäßaufnahmen der Gitteranordnung sind über jeweils vier Verbindungsstege mit benachbarten Probengefäßaufnahmen integral verbunden. Für die in den Figuren 2b und 3a vollständig gezeigten Thermoblöcke ist jeweils n=8, m=12.

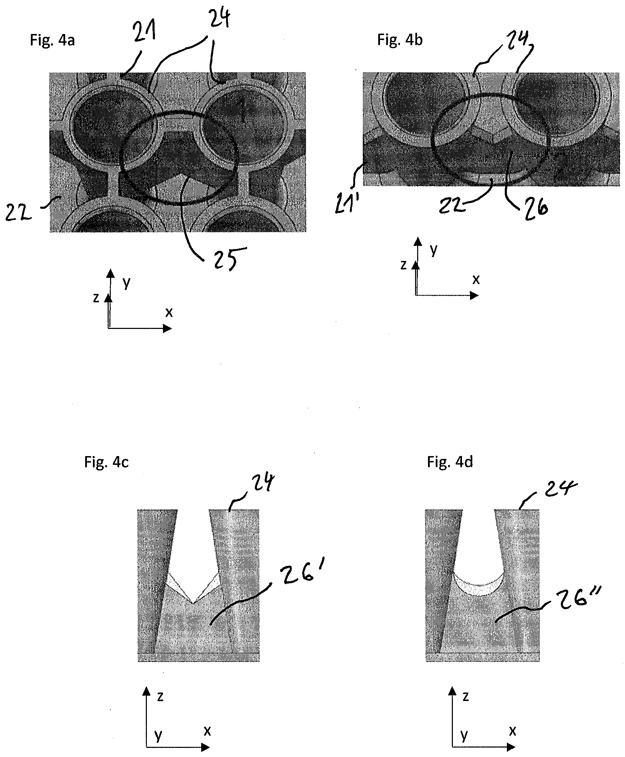

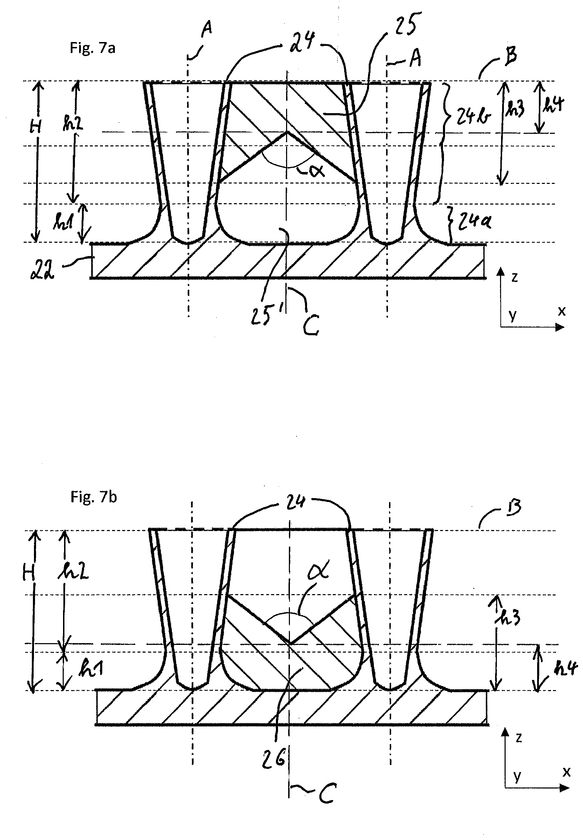

Die Verbindungsstege der Verstärkungsstruktur 23a (Fig. 2b und 3a) können beispielsweise so geformt und angeordnet sein, wie in den Figuren 4a und 7a noch genauer gezeigt ist. Sie können alternativ so geformt und angeordnet sein, wie jeweils in den Figuren 4b, 4c, 4d, 7b genauer gezeigt ist. Die Verbindungsstege der Verstärkungsstruktur sind vorliegend parallel der Achsen x und y angeordnet, sie können aber alternativ und/oder zusätzlich auch mit einem davon abweichenden Verlauf vorgesehen sein, beispielsweise parallel zu Linien, die einen von 90° verschiedenen Winkel, insbesondere 45°-Winkel) zur x- bzw. y-Achse aufweisen (bezeichnet auch als "diagonale Anordnung").

Fig. 3a zeigt den Thermoblock 21 gemäß Fig. 2b, der in einem Rahmen 29 eines Thermocyclers angeordnet ist.

Fig. 3b zeigt perspektivisch zweimal denselben Thermocycler 80, einmal von schräg vorne und einmal von schräg hinten. In der links gezeigten Vorderansicht ist der Thermoblock 91 zu sehen, der in einem Rahmen 99 angeordnet ist, der dem in Fig. 3a gezeigten Rahmen 29 entspricht. Der Schwenkdeckel des Thermocyclers ist in der Vorderansicht im geöffneten Zustand gezeigt, in der Rückansicht ist dieser Schwenkdeckel geschlossen.

Der in Fig. 3c gezeigte Thermocycler 80 weist einen Schwenkdeckel 82 auf, der mit einem schwenkbar am Deckel 82 angeordneten Deckelgriff 81 ausgestattet ist, mittels dem der Deckel 82 vom Benutzer sowohl öffenbar/schließbar ist als auch verriegelbar/entriegelbar. Im komplett verriegelten Zustand übt die im Deckel angeordnete heizbare Druckplatte 83 einen Anpressdruck auf das/die Probengefäße auf, die in den Probengefäßaufnahmen des Thermoblocks 84 angeordnet sind. Die in den Ausführungsbeispielen gezeigten Thermoblöcke sind alle ausreichend stabil, um während ihrer gesamten Lebensdauer beschädigungsfrei dem Druck zu widerstehen.

Als Thermoblock 84 kann jeder vorliegend in den Ausführungsbeispielen der Figuren beschriebene erfindungsgemäße Thermoblock dienen. Der Thermoblock 84 wird an seiner Unterseite (nicht sichtbar) von Peltierelementen flächig kontaktiert. Die Unterseite der Peltierelemente ist wiederum von einem metallischen Kühlkörper oder einem anderen Kühlsystem thermisch kontaktiert, um die Abwärme der Peltierelemente an die Umgebung abzuführen, die diese beim Temperieren (geregelten Heizen/Kühlen) erzeugen. Um einen gleichförmigen thermischen Kontakt der wärmeübertragenden Flächen des Thermoblocks 84, der Peltierelemente, des Kühlkörpers und eventuell von zwischen diesen Komponenten angeordneten wärmeübertragenden Medien oder Bauteilen sicherzustellen, werden der Thermoblock 84, die Peltierelemente, der Kühlkörpers und eventuelle zwischen diesen Komponenten angeordnete wärmeübertragende Medien oder Bauteilen mittels eines Befestigungssystems gegeneinander gepresst, was einen permanenten Druck auf den Thermoblock 84 ausübt. Die in den Ausführungsbeispielen gezeigten Thermoblöcke sind alle ausreichend stabil, um während ihrer gesamten Lebensdauer beschädigungsfrei diesem permanenten Druck zu widerstehen.

Der Thermocycler 80 wird durch eine elektronische Steuereinrichtung (nicht gezeigt gesteuert). Diese weist insbesondere einen Mikroprozessor und Steuerungssoftware (jeweils nicht gezeigt) auf. Der Thermocycler weist verschiedene Schnittstellen zur Energieversorgung bzw. für den Datenaustausch auf; Ethernet 85, Netz 86, Modusschalter 87, CAN out 88, CAN in 89. Gezeigt ist auch ein Wartungsklappe 91 und ein Typenschild 92. Der Thermocycler 80 ist über eine Benutzerschnittstelleneinrichtung, hier aufweisend ein Bedienfeld 90 mit Touchscreen und Bedienelementen, vom Benutzer bedienbar und insbesondere programmierbar. Der Thermocycler lässt sich vom Benutzer über Parametereinstellungen programmieren, bzw. geeignete, in einem Speicher der Steuereinrichtung gespeicherte Programme lassen sich vom Benutzer auswählen, um ein gewünschtes Temperierprotokoll automatisch ausführen zu lassen. Bei einem solchen Temperierprotokoll wird der Thermoblock 84 des Thermocyclers 80 sukzessive bzw. periodisch gemäß einem Temperaturzyklus temperiert. Ein solches Temperierprotokoll dient insbesondere der Durchführung einer Vervielfältigung einer in der flüssigen Lösung befindlichen Substanz, insbesondere der Durchführung einer Polymerasekettenreaktion (PCR). Dabei kann in einer, mehrerer oder allen Probengefäßaufnahmen des Thermoblocks ein Einzelgefäß oder -entsprechend- eine Probenplatte (Mikrotiterplatte bzw. PCR-Platte) angeordnet sein, in dem ein bestimmtes Volumen der flüssigen Lösung (oder verschiedener solcher Lösungen) enthalten ist. Der Thermocycler ist so betreibbar, dass jedes dieser Einzelgefäße bzw. jede dieser Probengefäßaufnahmen während jeder Temperaturstufe des Temperierzyklus mit möglichst derselben Temperatur temperiert wird. Der erfindungsgemäße Thermoblock ist vorzugsweise so geformt und ausgebildet, dass jede seiner Probengefäßaufnahmen während jeder Temperaturstufe des Temperierzyklus mit möglichst derselben Temperatur temperiert wird. Dazu dient insbesondere die integrale Fertigung des Thermoblocks und insbesondere dessen besondere Ausgestaltung mit Verstärkungsstrukturen bzw. Temperierstrukturen.

Als Verstärkungsstrukturen werden solche Strukturen des Thermoblocks bezeichnet, die diesen mechanisch stabilisieren. Als Temperierstrukturen werden solche Strukturen des Thermoblocks bezeichnet, mittels derer die gewünschte Wärmeübertragung bzw. die gewünschte Temperaturverteilung im Thermoblock bzw. in den darin angeordneten Probengefäßen erreicht bzw. optimiert wird. Eine Verstärkungsstruktur kann auch als Temperierstruktur dienen und umgekehrt. Die Verstärkungsstrukturen bzw. Temperierstrukturen können durch Strukturparameter eindeutig bestimmbar sein. Auf diese Weise können die Strukturparameter und damit die Form des Thermoblocks in einem erfindungsgemäßen Simulationsverfahren bzw. einem erfindungsgemäßen Verfahren zur Berechnung der Formstruktur eines Thermoblocks 84 ermittelt bzw. optimiert werden.

Fig. 4a zeigt perspektivisch den Ausschnitt des Thermoblocks 21. Dort ist im mit "1" markierten Bereich ein Verbindungsabschnitt bzw. Verbindungssteg 25 der Verstärkungsstruktur 23a zu sehen, der zwei benachbarte Probengefäßaufnahmen 24 miteinander verbindet und der integral mit diesen gefertigt ist. Der bzw. die Verbindungsstege 25 dienen als Verstärkungsstruktur und gleichzeitig als Temperierstruktur. Es hat sich durch das Simulationsverfahren insbesondere herausgestellt, dass mittels der Verbindungsstege 25 insbesondere die Wärme zwischen benachbarten Probengefäßen verteilbar ist. Die Verbindungsstege sind nicht direkt mit der Grundplatte verbunden. Sie entziehen der Probengefäßaufnahme Wärme, indem ein Wärmeaustausch mit der Umgebung erfolgt. Dieser Effekt steigt mit der Oberflächengröße der Verbindungsstege. Diese Verbindungsstege eignen sich daher, um heißere Probengefäßaufnahmen zu kühlen und die Temperaturhomogenität im Thermoblock zu verbessern. Strukturparameter für die optimale Wärmeübertragung, insbesondere den optimalen Wärmeentzug sind insbesondere die Dicke der Verbindungsstege und deren kleinster Abstand der Struktur zur Grundplatte.

Ein weiterer Nutzen dieser Verbindungsstege zwischen den Probengefäßaufnahmen ist, dass sie dem Thermoblock die erforderliche Stabilität und Steifigkeit verleihen. Die Verbindungsstege 25 liegen hier möglichst weit vom Schwerpunkt des Thermoblocks entfernt und können daher kleiner und/ oder dünner ausgelegt werden. Ein weiterer Vorteil ist, dass hier der thermische Einfluss von kleinen Verbindungsstegen relativ gering ist. Die Wärme muss zuerst durch die Probengefäßaufnahme fließen und erwärmt die Verbindungsstege 25 folglich als letztes.

Es wird bei der Fertigungsplanung vorzugsweise darauf geachtet, dass überhängende Geometrien mit zulässigen Aufbauwinkeln für den 3D Druck versehen werden (üblicherweise Winkel > 30-45°).

Fig. 4b zeigt perspektivisch den Ausschnitt des Thermoblocks 21', der abgesehen von der Form und Position der Verbindungsstege analog zum Thermoblock 21 aufgebaut ist. Dort ist im mit "2" markierten Bereich ein Verbindungsabschnitt bzw. Verbindungssteg 26 der Verstärkungsstruktur 23a zu sehen, der zwei benachbarte Probengefäßaufnahmen 24 miteinander verbindet und der integral mit diesen gefertigt ist. Der bzw. die Verbindungsstege 26 dienen als Verstärkungsstruktur und gleichzeitig als Temperierstruktur.

Die Verbindungsstege 26 zwischen den Probengefäßaufnahmen 24 sind hier auch mit der Grundplatte 22 verbunden. Dies hat den Effekt, dass die Wärme aus den heißeren Zwischenräumen zu den Probengefäßaufnahmen geführt wird und die Temperaturhomogenität somit gesteigert werden kann. Strukturparameter sind hier die Dicke und die allgemeine Form der Anbindung (abgerundet mit variablen Durchmessern, eckig/dreieckig mit variablen Winkeln, siehe Verbindungssteg 26' in Fig. 4c und Verbindungssteg 26" Fig. 4d).

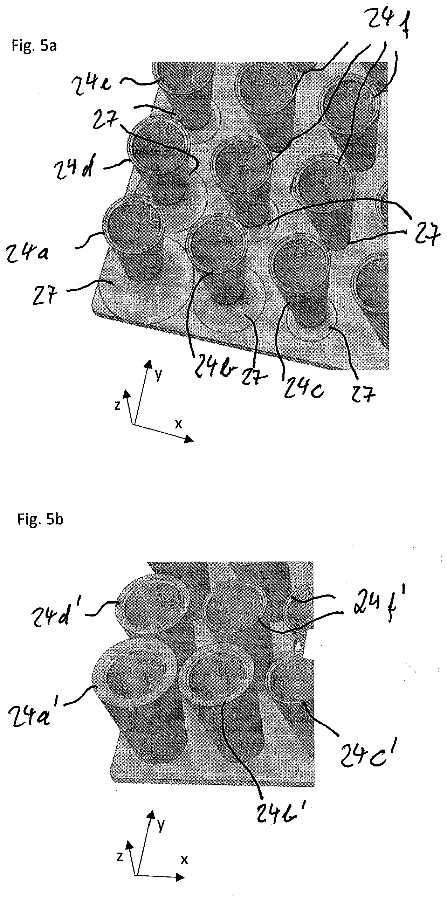

Fig. 5a zeigt perspektivisch den Ausschnitt eines Thermoblocks 31. Der eckständige (24a) bzw. die randständigen (24b, 24c, 24d, 24e) und die innenliegenden (24f) Probengefäßaufnahmen 24a, 24b, 24c, 24d, 24e und 24f des Thermoblocks 31 weisen hier Fußabschnitte 27 auf, die jeweils unterschiedlich ausgebildet sind. Insbesondere weist der Fußabschnitt 27 der eckständige Probengefäßaufnahme 24a eine größere Masse auf als der Fußabschnitt 27 der randständigen (24b, 24c, 24d, 24e) und die innenliegenden (24f) Probengefäßaufnahmen. Insbesondere weist der Fußabschnitt 27 der randständigen Probengefäßaufnahmen 24b, 24c, 24d, 24e eine größere Masse auf als der Fußabschnitt 27 der innenliegenden Probengefäßaufnahmen 24f. Dies wird insbesondere durch den Biegungsradius des Fußabschnitts betrachtet in einer zur x-y-Ebene senkrechten Ebene erreicht, der für die eckständige Probengefäßaufnahme 24a größer ist als für die anderen nicht-eckständigen Probengefäßaufnahmen. Gezeigt ist einer der vier Eckbereiche des Thermoblocks, die aber alle analog ausgebildet sind. Mögliche Strukturparameter zur simulationsbasierten Optimierung sind insbesondere die Masse und oder der Biegungsradius des Fussabschnitts oder mehrerer oder aller Fussabschnitte.

Fig. 5b zeigt perspektivisch den Ausschnitt eines erfindungsgemäßen Thermoblocks gemäß einem siebten Ausführungsbeispiel. Anstelle der Fußabschnitt sind hier die Wanddicken der im wesentlichen hohlkonsuförmigen Probengefäßaufnahme variiert. Insbesondere weist die eckständige Probengefäßaufnahme 24a' eine größere Wanddicke auf als die randständigen 24b', 24c', 24d' und die innenliegenden 24f' Probengefäßaufnahmen. Insbesondere weisen die randständigen Probengefäßaufnahmen 24b, 24c, 24d, 24e eine größere Wanddicke auf die innenliegenden Probengefäßaufnahmen 24f. Durch die individuelle Aufdickung der Wandstärken der Probengefäßaufnahmen und die dadurch erreichte individuelle Variation des Wärmeflusses können positive Auswirkungen auf die Homogenität und die Schnelligkeit des Thermoblocks erzielt werden. Mögliche Strukturparameter zur simulationsbasierten Optimierung sind insbesondere die Wanddicken einzelner, mehrerer oder aller Probengefäßaufnahmen des Thermoblocks.

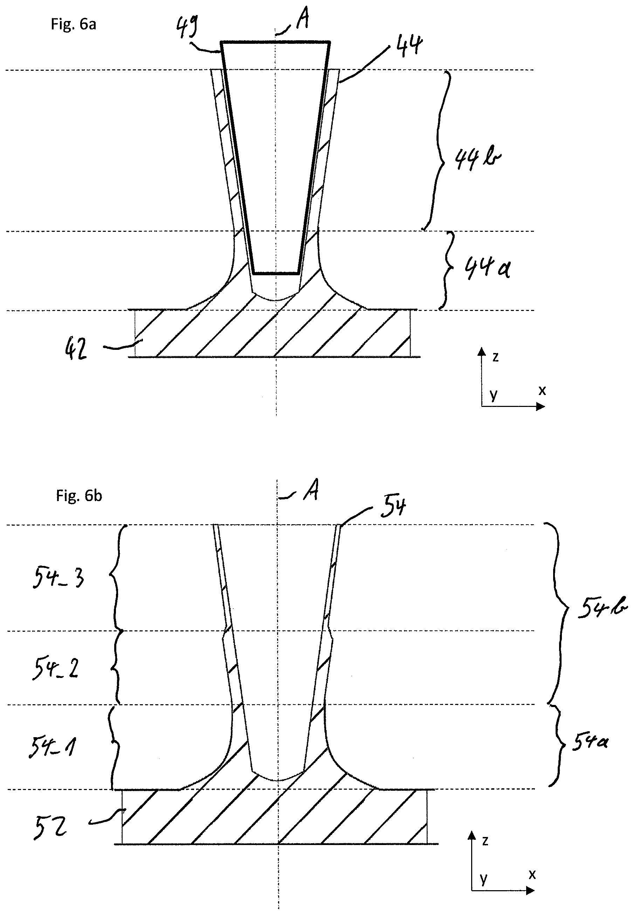

Fig. 6a zeigt in einer seitlichen Querschnittsansicht den Ausschnitt eines erfindungsgemäßen Thermoblocks gemäß einem achten Ausführungsbeispiel. Zu sehen sind insbesondere ein Abschnitt einer Grundplatte 42 und insbesondere die Probengefäßaufnahme 44, in der ein konusförmiges Probengefäß 49 (oder ein Probengefäß mit zumindest konusförmigem Abschnitt der Außenwand) eingesetzt ist, das in thermisch-physikalischem Kontakt mit der Innenseite der Probengefäßaufnahme 40 steht. Gezeigt ist insbesondere der untere Endabschnitt bzw. Fußabschnitt 44a und der hohlkonusförmige obere Wandabschnitt 44b. Im oberen Wandabschnitt 44b weist die Probengefäßaufnahme 40 eine geringere Wanddicke auf als im unteren Endabschnitt bzw. Fußabschnitt 44a, in den sich das Innenvolumen der Probengefäßaufnahme 44 hier auch erstreckt. Die Probengefäßaufnahme 44 ist hier rotationssymmetrisch zur Längsachse A ausgebildet. Die genannten Höhen und die Dicken sind Strukturparameter.

Fig. 6b zeigt in einer seitlichen Querschnittsansicht den Ausschnitt eines erfindungsgemäßen Thermoblocks gemäß einem neunten Ausführungsbeispiel. Zu sehen sind insbesondere ein Abschnitt einer Grundplatte 52 und insbesondere die Probengefäßaufnahme 54, in der ein konusförmiges Probengefäß 49 einsetzbar ist, um dieses in thermisch-physikalischem Kontakt mit der zylinderförmigen Innenseite der Probengefäßaufnahme 40 zu bringen. Die Probengefäßaufnahme 50 ist hier rotationssymmetrisch zur Längsachse A ausgebildet. Gezeigt ist insbesondere der untere Endabschnitt bzw. Fußabschnitt 54a und der hohlkonusförmige obere Wandabschnitt 54b. Im oberen Wandabschnitt 54b weist die Probengefäßaufnahme 40 eine geringere Wanddicke auf als im unteren Endabschnitt bzw. Fußabschnitt 54a, in den sich das Innenvolumen der Probengefäßaufnahme 54 hier auch erstreckt.

Die Probengefäßaufnahme 54 weis im oberen Wandabschnitt 54b mindestens zwei Bereiche 54b', 54b" mit unterschiedlichen Wanddicken auf, so dass sich insgesamt drei charakteristische Wandteilabschnitte der Wand ergeben: im Fussabschnitt 54a ist ein unterer Wandteilabschnitt 54_1 erkennbar, der -gemittelt entlang der Längsachse A, im Durchschnitt eine höhere Wanddicke aufweist als die anderen Wandteilabschnitte 54_2, 54_3. Die Wanddicke des mittleren Wandteilabschnitts 54_2 ist hier im Wesentlichen konstant und kleiner als die Wanddicke im unteren Wandteilabschnitt 54_1, aber größer als die Dicke im oberen Wandteilabschnitt 54_3. Die Übergänge zwischen den Außenseiten der Wandteilabschnitte sind vorzugsweise kantenfrei, können aber auch stufenartig und/oder kantig sein. An der Innenseite folgen die Wandteilabschnitte in Längsrichtung kontinuierlich nach oben der Form des sich öffnenden Konus. Die Wandteilabschnitte erfüllen gemeinsam den Zweck als Füllhöhenabschnitt, der Wandteilabschnitt 54_3 erfüllt den Zweck als Leerabschnitt, wie zuvor weiter oben beschreiben. Die genannten Höhen und die Dicken sind Strukturparameter.

Fig. 7a zeigt in einer seitlichen Querschnittsansicht einen Ausschnitt des Thermoblocks 21, mit der Grundplatte 22 und den Probengefäßaufnahmen 24. Der Verbindungssteg 25 verbindet die benachbarten Probengefäßaufnahmen 24 und ist aufgrund der additiven Fertigung integral mit diesen verbunden. Der Verbindungssteg 25 ist nicht direkt mit der Grundplatte 22 verbunden, vielmehr ist er durch einen Leerraum 25' von der Grundplatte getrennt. Die Gesamthöhe der Probengefäßaufnahme 24 ist H, die Höhe des unteren Wandabschnitts 24a ist h1, die Höhe des oberen Wandabschnitts 24b ist h2, die maximale Höhe des Verbindungsstegs 25 ist h3, die minimale Höhe des Verbindungsstegs 25 ist h4. Die Höhen sind jeweils gemessen entlang der Längsachse A. Die Dicke des Verbindungssteg wird senkrecht zur Fläche des Verbindungsstegs 25 gemessen, hier entlang der y-Achse. Der Verbindungssteg 25 kann jeweils kantenlos in die Außenwand der benachbarten Probengefäßaufnahmen 24 übergehen, die Dicke des Verbindungsstegs 25 kann sich insbesondere in diesem Übergangsbereich -aber nicht nur dort- verändern, insbesondere dort vergrößern. Die genannten Höhen und die Dicke sind Strukturparameter. Vorzugsweise ist h3 >= 0,5^{∗}H, insbesondere h3 <= H. Vorzugsweise ist h4=0,5^{∗}h3 (dieser Wert mit Bereich vorzugsweise +-5% von h3), h3 <= 0,5^{∗}H, h3 <= 0,3^{∗}H, h3 >= 0,1^{∗}H. Die obere Kante des Verbindungsstegs verläuft vorzugsweise in, oder parallel unterhalb, einer Ebene B, in der auch die Öffnungen der Probengefäßaufnahmen 24 des Thermoblocks angeordnet sind. Die Hauptflächen (also die beiden größten Flächen) des Verbindungsstegs 25 verlaufen senkrecht zur Hauptebene der Grundplatte 22, vorliegend parallel zur Ebene z-x oder (in Fig. 7a nicht gezeigt) zur Ebene z-y. Die untere Kante des Verbindungsstegs hebt sich entlang der x-Achse von beiden Seiten in Richtung der Zentrallinie C des Verbindungsstegs, die parallel zur Längsachse A verläuft. Die beiden aufeinander zu laufenden Abschnitte dieser Unterkante treffen sich in einem Winkel α, wobei vorzugsweise 90° <= α <= 180°, vorzugsweise 110° <= α <= 160°. Die genannten Höhen, die Dicken und der Winkel α sind Strukturparameter.

Fig. 7b zeigt in einer seitlichen Querschnittsansicht einen Ausschnitt des Thermoblocks 21, mit der Grundplatte 22 und den Probengefäßaufnahmen 24. Der Verbindungssteg 26 verbindet die benachbarten Probengefäßaufnahmen 24 und ist aufgrund der additiven Fertigung integral mit diesen verbunden; er ist zudem direkt und integral mit der Grundplatte 22 verbunden. Die Gesamthöhe der Probengefäßaufnahme 24 ist H, die Höhe des unteren Wandabschnitts 24a ist h1, die Höhe des oberen Wandabschnitts 24b ist h2, die maximale Höhe des Verbindungsstegs 26 ist h3, die minimale Höhe des Verbindungsstegs 26 ist h4. Die Höhen sind jeweils gemessen entlang der Längsachse A. Die Dicke des Verbindungsstegs wird senkrecht zur Fläche des Verbindungsstegs 26 gemessen, hier entlang der y-Achse. Der Verbindungssteg 26 kann jeweils kantenlos in die Außenwand der benachbarten Probengefäßaufnahmen 24 und/oder in die Grundplatte 22 übergehen, die Dicke des Verbindungsstegs 26 kann sich insbesondere in diesem Übergangsbereich -aber nicht nur dort- verändern, insbesondere dort vergrößern. Die genannten Höhen und die Dicke sind Strukturparameter. Vorzugsweise ist h3 >= 0,5^{∗}H, insbesondere h3 <= H. Vorzugsweise ist h4=0,5^{∗}h3 (dieser Wert mit Bereich vorzugsweise +-5% von h3), h3 <= 0,5^{∗}H, h3 <= 0,3^{∗}H, h3 >= 0,1^{∗}H. Die untere Kante des Verbindungsstegs verläuft vorzugsweise an der Oberseite der Grundplatte 22. Die Hauptflächen (also die beiden größten Flächen) des Verbindungsstegs 26 verlaufen senkrecht zur Hauptebene der Grundplatte 22, vorliegend parallel zur Ebene z-x oder (in Fig. 7a nicht gezeigt) zur Ebene z-y. Der Verbindungssteg weist hier einen Leerraum zwischen der oberen Kante des Verbindungsstegs 26 und der Ebene B auf. Die obere Kante des Verbindungsstegs senkt sich entlang der x-Achse von beiden Seiten in Richtung der Zentrallinie C des Verbindungsstegs, die parallel zur Längsachse A verläuft. Die beiden aufeinander zu laufenden Abschnitte dieser Oberkante treffen sich in einem Winkel α, wobei vorzugsweise 90° <= α <= 180°, vorzugsweise 110° <= α <= 160°. Die genannten Höhen, die Dicken und der Winkel α sind Strukturparameter.

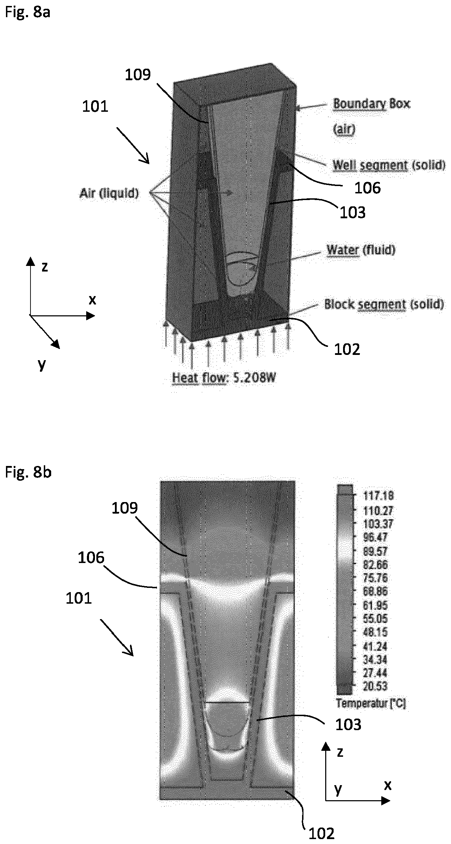

Fig. 8a zeigt perspektivisch den Ausschnitt eines erfindungsgemäßen Thermoblocks 101 gemäß einem zehnten Ausführungsbeispiel, wobei dieser Ausschnitt als Modell zur Durchführung eines beispielhaften Verfahrens zur Simulation bzw. Berechnung der Formstruktur eines erfindungsgemäßen Thermoblocks dient. Diese Berechnungen wurden vorliegend mittels ANSYS der Version 2019 R1 sowie 2019R2 durchgeführt. Die Abbildung zeigt die der Berechnung dienende, zunächst luftgefüllte Einheitszelle (boundary box) im Innenbereich der gitterförmigen Probengefäßanordnung eines Thermoblocks - in den Randbereichen ist der Aufbau der Einheitszelle vorzugsweise anders. Die Form der metallischen Probengefäßaufnahme 103 ist hier ähnlich wie beim Thermoblock 1 gezeigt, wobei aber die Probengefäßaufnahmen nach oben hin durch eine parallel zur Grundplatte 102 verlaufende Platte 106 verbunden sind, die für sich betrachtet eine Lochplatte ist, in deren Löchern die Öffnungen der Probengefäßaufnahmen münden. Zur Durchführung des Verfahrens zur Simulation bzw. Berechnung der Formstruktur eines erfindungsgemäßen Thermoblocks werden die dort illustrierten Annahmen getroffen: In der Probengefäßaufnahme ist ein Kunststoffgefäß mit konusförmiger Form angeordnet, der die Innenseite der Probengefäßaufnahme physikalisch und thermisch kontaktiert. Im Kunststoffgefäß ist Wasser bis zu einer bestimmten Füllhöhe. An der Unterseite der Grundplatte wirkt ein konstanter Wärmefluss mit 5,208 W.

Fig. 8b zeigt ein berechnetes Wärmebild, das in einer seitlichen Querschnittsansicht den Ausschnitt des Thermoblocks 101 gemäß Fig. 8a und die daran vorliegende Wärmeverteilung zeigt, die sich in einem beispielhaften erfindungsgemäßen Verfahren zur Simulation bzw. Berechnung der Formstruktur des Thermoblocks ergibt. Es ist erkennbar, dass sich im unteren Endbereich b1 parallel zur Ebene x-y eine breite Ausdehnung der maximalen Temperatur ergibt. Dieser Bereich kann deshalb mit einem metallischen Fussabschnitt versehen werden, um die Temperiergeschwindigkeit zu erhöhen bzw. zu maximieren. Der oberhalb des Wasserspiegels gelegenen Abschnitt b2 wird ebenfalls stark erwärmt (Leerabschnitt): da dort aber keine Probe angeordnet ist, wird diese Wärme nicht genutzt. Der Leerabschnitt muss aber jedes Mal temperiert werden. Vorzugsweise wird deshalb die Masse der Probengefäßaufnahme im Leerabschnitt reduziert bzw. minimiert. Dies kann durch Reduktion der Wanddicke, wie bereits gezeigt, oder durch lokale Ausdünnungen oder Porösität dieses Abschnitts erfolgen. Dadurch wird die "parasitäre" Wärmekapazität des Thermoblocks reduziert, der sich dadurch schneller temperieren lässt.

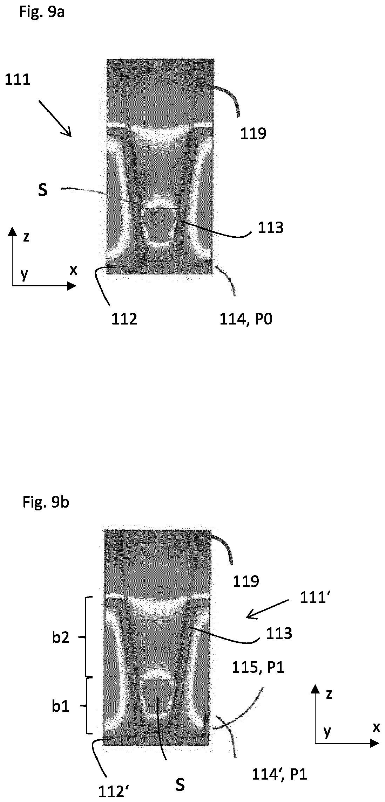

Fig. 9a zeigt ein berechnetes Wärmebild, das in einer seitlichen Querschnittsansicht den Ausschnitt eines erfindungsgemäßen Thermoblocks 111 gemäß einem elften Ausführungsbeispiel und die daran vorliegende Wärmeverteilung zeigt, die sich in einem beispielhaften erfindungsgemäßen Verfahren zur Simulation bzw. Berechnung der Formstruktur des Thermoblocks ergibt. Die Probengefäßaufnahme 113 und das Wärmebild gleicht jener der Figur 8a, 8b. Der Thermosensor 114, der von der elektronischen Steuer- bzw. Regeleinrichtung für die Messung im Rahmen der Temperaturregelung herangezogen wird, ist hier in einer Position P0 unmittelbar an der Grundplatte 112 angeordnet. Fig. 9b zeigt eine gegenüber Fig. 9a modifizierte Anordnung eines Thermoblocks 111', bei der als zusätzliche Struktur ein Sockel 115 als vertikale, aus der Grundplatte 112' nach oben hervorstehende Erhebung ausgebildet ist. Durch Vergleich mit dem resultierenden Wärmebild ergibt sich, dass die Oberseite des Sockels 115 aus dem Bereich der maximalen Temperatur herausragt und in einen weniger stark erhitzten Bereich mündet, dessen Temperatur eher der Temperatur in der wässrigen Probe s ähnelt. Bei einer solchen Anordnung lässt sich eine noch zuverlässigere und genauere elektronische Temperaturregelung realisieren. Der Thermosensor 114', der von der elektronischen Steuer- bzw. Regeleinrichtung für die Messung im Rahmen der Temperaturregelung herangezogen wird, ist in Fig. 9b am Sockel 115 in einer Position P1 oberhalb der Grundplatte angeordnet.

Merkmale von Probengefäßaufnahmen und Verstärkungsstrukturen bzw. Temperierstrukturen der vorgenannten Beispiele lassen sich auch in einem einzigen Thermoblock kombinieren. Weitere hier nicht illustrierte, aber kombinierbare oder separat an einem erfindungsgemäße n Thermoblock bevorzugte Merkmale sind jeweils:
a. Gestaffelte Tiefe der Probengefäßaufnahmen: Randständige Probengefäßaufnahmen können im Vergleich zu innenliegenden Probengefäßaufnahmen eine andere Tiefe von Probengefäßaufnahmen aufweisen. Diese Tiefe(n) können Strukturparameter sein.
b. Individuelle Aufdickung der Grundplatte: Durch überlegtes Platzieren von zusätzlichem Material auf der Grundplatte können lokale Wärmekapazitäten eingestellt werden, um die Homogenität zu steigern. Dazu weist die Grundplatte mindestens zwei verschiedene Plattenbereiche auf, die jeweils eine unterschiedliche (konstante oder durchschnittliche) Plattenbereichsdicke aufweisen. Die Größe (Volumen, Flächenausdehnung) der Plattenbereiche und die Plattenbereichsdicken können Strukturparameter sein.
c. Individuelles Aussparen der Grundplatte: durch lokale Aussparungen in der Grundplatte kann die Wärmekapizität weiter gesenkt werden. Dies kann die Schnelligkeit und die Homogenität verbessern. Dazu weist der Basisabschnitt bzw. die Grundplatte mindestens eine oder zwei oder mehrere bzw. eine Vielzahl von Aussparungen auf. Diese können jeweils eine unterschiedliche (konstante oder durchschnittliche) Aussparungstiefe aufweisen. Die Größe (Volumen, Flächenausdehnung) der Aussparungen und die Aussparungstiefen können Strukturparameter sein.
d. Durch die Designfreiheit des additiven Verfahrens kann auch ein Dichtrahmen/ Aufnahmerahmen des Thermoblocks mit der Grundplatte kombiniert werden, um die Wärmekapazität weiter zu senken.
e. Reduktion des thermischen Einflusses von Befestigungsstrukturen, -hülsen/ - stegen/ -sockeln durch Aufnahme der Verbindungskräfte über das Vorsehen von Gitterstrukturen, die optimal an der Grundplatte angeordnet bzw. verteilt werden. Die Befestigungsstrukturen dienen insbesondere der Befestigung des Thermoblocks im Thermocycler.

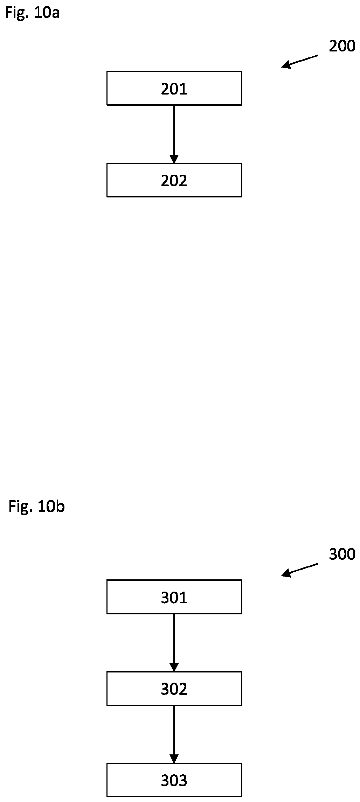

Fig. 10a zeigt schematisch das Verfahren zur Herstellung eines Thermoblocks, welcher der Aufnahme und Temperierung von Laborprobengefäßen in einem Labortemperiergerät, insbesondere in einem PCR-Thermocycler, dient, aufweisend die Schritte:
- Herstellen des Thermoblocks mittels eines additiven Fertigungsverfahrens (201);
- Nachbearbeiten des mittels des additiven Fertigungsverfahrens erzeugten Thermoblocks durch ein Nachbearbeitungsverfahren, insbesondere durch Erhitzen, Beschichten, Polieren und/oder spanendes Bearbeiten (202).

Fig. 10b zeigt schematisch das Verfahren zur Berechnung der Formstruktur eines Thermoblocks, welcher der Aufnahme und Temperierung von Laborprobengefäßen in einem Labortemperiergerät, insbesondere in einem PCR-Thermocycler, dient und welcher durch ein additives Fertigungsverfahren herstellbar ist, wobei die Formstruktur des Thermoblocks durch Strukturparameter definierbar ist, gemäß einem Ausführungsbeispiel, aufweisend die Schritte:
- Variieren mindestens eines Strukturparameters (301);
- Durchführen eines Simulationsverfahrens zur Simulation des Wärmestroms durch mindestens einen Abschnitt des Thermoblocks in Abhängigkeit von dem mindestens einen Strukturparameter; (302)
- Auswahl mindestens eines Strukturparameters in Abhängigkeit von dem Simulationsverfahren zur additiven Fertigung des so strukturell bestimmten Thermoblocks. (303).

Geschwindigkeitsvorteile (maximale Heizrate bzw. Kühlrate) des mittels 3D-Drucks hergestellten Thermoblocks 21 ("MC X50 3D-Block") im Vergleich zu anderen Thermoblöcken, die in demselben Thermocycler oder in anderen kommerziell erhältlichen Thermocyclern (Hersteller: Eppendorf AG, Deutschland) eingebaut sind, ergeben sich im Vergleichsexperiment wie folgt:

### Vergleich Rampengeschwindigkeit

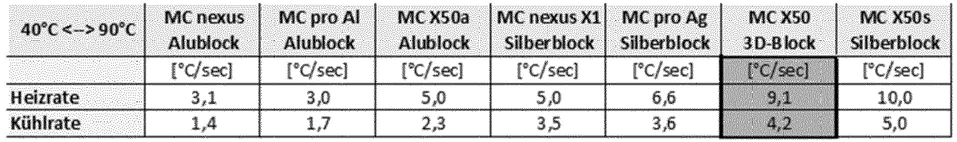

## Patentansprüche

1. Thermoblock zur Aufnahme und Temperierung mindestens eines Laborprobengefäßes in einem Labortemperiergerät, insbesondere in einem PCR-Thermocycler, **dadurch gekennzeichnet, dass** der Thermoblock mittels eines additiven Fertigungsverfahrens unter Verwendung eines metallhaltigen Werkstoffs hergestellt wurde.

2. Thermoblock gemäß Anspruch 1, der eine Vielzahl von mittels des additiven Fertigungsverfahrens hergestellten Probengefäßaufnahmen zur Aufnahme und Temperierung einer Vielzahl von Laborprobengefäßen aufweist.

3. Thermoblock gemäß Anspruch 1 oder 2, der eine Grundplatte aufweist, deren erste Plattenseite zur thermischen Kopplung mit einer Temperiereinrichtung eingerichtet ist, und deren zweite, der ersten Plattenseite gegenüberliegende Plattenseite mit einer Vielzahl von mittels des additiven Fertigungsverfahrens hergestellten Probengefäßaufnahmen zur Aufnahme und Temperierung einer Vielzahl von Laborprobengefäßen einstückig verbunden ist, wobei diese Vielzahl von Probengefäßaufnahmen insbesondere in einem rechteckigen Gitter angeordnet sind.

4. Thermoblock gemäß einem der Ansprüche 1 bis 3, der mindestens eine mittels des additiven Fertigungsverfahrens hergestellte Probengefäßaufnahme aufweist, die becherförmig, insbesondere zumindest abschnittsweise hohlkonusförmig, ausgebildet ist.

5. Thermoblock gemäß einem der Ansprüche 2 bis 4, wobei die Probengefäßaufnahme vorzugsweise eine Öffnung zur Aufnahme des Laborprobengefäßes aufweist, und einen der Öffnung gegenüberliegenden Fußabschnitt, der integral mit dem Plattenabschnitt verbunden ist und der mittels des additiven Fertigungsverfahrens hergestellt wurde, wobei sich das Volumen des Materials des Fußabschnitts ausgehend vom Basisabschnitt nach oben verringert.

6. Thermoblock gemäß einem der Ansprüche 1 bis 5, der einen Basisabschnitt aufweist und mindestens eine mit diesem verbundene Probengefäßaufnahme, die eine Öffnung zur Aufnahme des Probengefäßes und einen zwischen der Öffnung und dem Basisabschnitt angeordneten Wandabschnitt aufweist, dessen Innenseite zur thermischen Kopplung mit dem in der Probengefäßaufnahme angeordneten Laborprobengefäßes eingerichtet ist, wobei insbesondere der Wandabschnitt einen unteren Wandteilabschnitt aufweist, dessen Wanddicke größer ist als die Wanddicke eines darüber angeordneten Wandteilabschnitts.

7. Thermoblock gemäß einem der Ansprüche 1 bis 6, der eine, parallel einer horizontal anordenbaren Ebene verlaufende, Grundplatte und mindestens zwei mit diesem verbundene, benachbarte Probengefäßaufnahmen, aufweist, wobei mindestens ein, oder genau ein, parallel der Ebene verlaufender Verbindungsabschnitt zwischen den mindestens zwei benachbarten Probengefäßaufnahmen vorhanden ist, insbesondere zwischen mehreren oder allen unmittelbar benachbarten Probengefäßaufnahmen.

8. Thermoblock gemäß Anspruch 7, wobei zwischen dem Verbindungsabschnitt und der Grundplatte ein Leerraum vorhanden ist und wobei dieser Verbindungsabschnitt nicht direkt mit der Grundplatte verbunden ist.

9. Thermoblock gemäß Anspruch 7, wobei zwischen dem Verbindungsabschnitt und der Grundplatte kein Leerraum vorhanden ist und/oder wobei dieser Verbindungsabschnitt direkt mit der Grundplatte verbunden ist.

10. Thermoblock gemäß einem der vorangehenden Ansprüche, der integral aus einem Granulat enthaltend Aluminium oder eine Aluminium-Legierung mittels des additiven Fertigungsverfahrens hergestellt wurde.

11. Thermoblock gemäß einem der vorangehenden Ansprüche, der nach seiner Herstellung mittels des additiven Fertigungsverfahrens durch ein Nachbearbeitungsverfahren bearbeitet wurde, insbesondere durch Erhitzen, Beschichten, Polieren und/oder spanendes Bearbeiten.

12. Laborgerät, insbesondere PCR-Thermocycler, der einen Thermoblock gemäß einem der vorangehenden Ansprüche enthält.

13. Verfahren zur Herstellung eines Thermoblocks, welcher der Aufnahme und Temperierung von Laborprobengefäßen in einem Labortemperiergerät, insbesondere in einem PCR-Thermocycler, dient, aufweisend den Schritt:
Herstellen des Thermoblocks mittels eines additiven Fertigungsverfahrens.

14. Verfahren zur Herstellung eines Thermoblocks, gemäß Anspruch 13, aufweisend den Schritt:
Nachbearbeiten des mittels des additiven Fertigungsverfahrens erzeugten Thermoblocks durch ein Nachbearbeitungsverfahren, insbesondere durch Erhitzen, Beschichten, Polieren und/oder spanendes Bearbeiten.

15. Verfahren zur Berechnung der Formstruktur eines Thermoblocks, welcher der Aufnahme und Temperierung von Laborprobengefäßen in einem Labortemperiergerät, insbesondere in einem PCR-Thermocycler, dient und welcher durch ein computergesteuertes, von mindestens einem Strukturparameter abhängiges additives Fertigungsverfahren herstellbar ist, wobei die Formstruktur des Thermoblocks durch den mindestens einen Strukturparameter definierbar ist, aufweisend den Schritt:
* Variieren mindestens eines Strukturparameters;
* Durchführen eines Simulationsverfahrens zur Simulation des Wärmestroms durch mindestens einen Abschnitt des Thermoblocks in Abhängigkeit von dem mindestens einen Strukturparameter;
* Auswahl mindestens eines Strukturparameters in Abhängigkeit von dem Simulationsverfahren und Bereitstellen dieses mindestens einen Strukturparameters für die nachfolgende additive Fertigung des so strukturell bestimmten Thermoblocks.
